(19) **Europäisches Patentamt / European Patent Office / Office européen des brevets**

(11) **EP 4 383 863 A1**

(12) **EUROPEAN PATENT APPLICATION**
published in accordance with Art. 153(4) EPC

(43) Date of publication:
**12.06.2024 Bulletin 2024/24**

(21) Application number: **22853578.7**

(22) Date of filing: **08.08.2022**

(51) International Patent Classification (IPC):
**H04W 64/00** $^{(2009.01)}$    **H04W 24/10** $^{(2009.01)}$
**H04W 72/23** $^{(2023.01)}$    **H04L 5/00** $^{(2006.01)}$
**H04L 1/00** $^{(2006.01)}$

(52) Cooperative Patent Classification (CPC):
**H04L 1/00; H04L 5/00; H04W 24/10; H04W 64/00**

(86) International application number:
**PCT/KR2022/011760**

(87) International publication number:
**WO 2023/014203 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2021 KR 20210103855**

(71) Applicant: **LG Electronics Inc.**
**Yeongdeungpo-gu**
**Seoul 07336 (KR)**

(72) Inventors:
• **LEE, Jeongsu**
  **Seoul 06772 (KR)**
• **KO, Hyunsoo**
  **Seoul 06772 (KR)**
• **PARK, Haewook**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **METHOD FOR TRANSMITTING AND RECEIVING SIGNAL IN WIRELESS COMMUNICATION SYSTEM, AND APPARATUS SUPPORTING SAME**

(57)    Various embodiments relate to a next-generation wireless communication system for supporting a higher data transmission rate and the like than a 4th generation (4G) wireless communication system. According to various embodiments, a method for transmitting and receiving a signal in a wireless communication system and an apparatus supporting same may be provided, and other various embodiments may be provided.

**FIG. 19**

EP 4 383 863 A1

**Description**

**TECHNICAL FIELD**

The present disclosure relates to a wireless communication system.

**BACKGROUND**

As a number of communication devices have required higher communication capacity, the necessity of the mobile broadband communication much improved than the existing radio access technology (RAT) has increased. In addition, massive machine type communications (MTC) capable of providing various services at anytime and anywhere by connecting a number of devices or things to each other has been considered in the next generation communication system. Moreover, a communication system design capable of supporting services/UEs sensitive to reliability and latency has been discussed.

**DISCLOSURE**

**TECHNICAL PROBLEM**

Accordingly, the present disclosure is directed to a method for transmitting and receiving a signal in a wireless communication system and apparatus for supporting the same that substantially obviates one or more problems due to limitations and disadvantages of the related art.
An object of the present disclosure is to provide a method for positioning and apparatus for supporting same in a wireless communication system.
It will be appreciated by persons skilled in the art that the objects that could be achieved with various embodiments is not limited to what has been particularly described hereinabove and the above and other objects that various embodiments could achieve will be more clearly understood from the following detailed description.

**TECHNICAL SOLUTION**

To achieve these objects and other advantages and in accordance with the purpose of the disclosure, as embodied and broadly described herein, there is provided a method and apparatus for transmitting and receiving a signal in a wireless communication system.
According to various embodiments, a method performed by a user equipment (UE) in a wireless communication system may be provided.
According to various embodiments, the method may include: receiving physical uplink shared channel (PUSCH) configuration information related to a plurality of periodically configured PUSCH resources; receiving one or more positioning reference signals (PRSs), wherein the one or more PRSs may be received on at least one of one or more PRS resources or one or more PRS resource sets including the one or more PRS resources; and transmitting information on one or more measurement reports obtained from the one or more PRSs.
According to various embodiments, the information on the one or more measurement reports may be transmitted on one or more PUSCH resources among the plurality of PUSCH resources.
According to various embodiments, before transmitting the information on the one or more measurement reports, the UE may transmit activation information for identifying the one or more PUSCH resources for transmitting the information on the one or more measurement reports.
According to various embodiments, the activation information may include information indicating that among multiple PUSCH resources after a time at which the activation information is transmitted among the plurality of PUSCH resources, an N-th PUSCH resource or resources from the N-th PUSCH resource to an M-th PUSCH resource are the one or more PUSCH resources, where N may be a natural number, and M may be a natural number.
According to various embodiments, based on the UE being in a radio resource control (RRC) connected state, the activation information may be transmitted in at least one of a medium access control (MAC) control element (CE) or uplink control information (UCI).
According to various embodiments, based on the UE being in an RRC inactive state or an RRC idle state, the activation information may be transmitted on a physical random access channel (PRACH).
According to various embodiments, based on a measurement gap (MG) being not configured, the activation information may be transmitted by the UE.
According to various embodiments, based on the MG being configured, (i) the one or more PRSs may be received within the MG; (ii) the activation information may not be transmitted; and (iii) the one or more PUSCH resources for transmitting the information on the one or more measurement reports may be one or more PUSCH resources included after the MG and closest to an end point of the MG among the plurality of PUSCH resources.

According to various embodiments, based on an MG being configured, (i) the one or more PRSs may be received within the MG; and (ii) the one or more PUSCH resources for transmitting the information on the one or more measurement reports are one or more PUSCH resources included after the MG and indicated as activated based on a bitmap included in the activation information among the plurality of PUSCH resources.

According to various embodiments, based on an MG being configured, (i) the one or more PRSs may be received within the MG; and (ii) the one or more PUSCH resources for transmitting the information on the one or more measurement reports may be one or more PUSCH resources included after the MG and included within a predetermined time duration among the plurality of PUSCH resources.

According to various embodiments, a user equipment (UE) configured to operate in a wireless communication system may be provided.

According to various embodiments, the UE may include a transceiver, and at least one processor coupled with the transceiver.

According to various embodiments, the at least one processor may be configured to: receive PUSCH configuration information related to a plurality of periodically configured PUSCH resources; receive one or more PRSs, wherein the one or more PRSs may be received on at least one of one or more PRS resources or one or more PRS resource sets including the one or more PRS resources; and transmit information on one or more measurement reports obtained from the one or more PRSs.

According to various embodiments, the information on the one or more measurement reports may be transmitted on one or more PUSCH resources among the plurality of PUSCH resources.

According to various embodiments, before transmitting the information on the one or more measurement reports, the UE may transmit activation information for identifying the one or more PUSCH resources for transmitting the information on the one or more measurement reports.

According to various embodiments, the activation information may include information indicating that among multiple PUSCH resources after a time at which the activation information is transmitted among the plurality of PUSCH resources, an N-th PUSCH resource or resources from the N-th PUSCH resource to an M-th PUSCH resource are the one or more PUSCH resources, where N may be a natural number, and M may be a natural number.

According to various embodiments, based on the UE being in an RRC connected state, the activation information may be transmitted in at least one of a MAC CE or UCI.

According to various embodiments, based on the UE being in an RRC inactive state or an RRC idle state, the activation information may be transmitted on a PRACH.

According to various embodiments, based on an MG being not configured, the activation information may be transmitted by the UE.

According to various embodiments, based on the MG is configured, (i) the one or more PRSs may be received within the MG; (ii) the activation information may not be transmitted; and (iii) the one or more PUSCH resources for transmitting the information on the one or more measurement reports may be one or more PUSCH resources included after the MG and closest to an end point of the MG among the plurality of PUSCH resources.

According to various embodiments, the at least one processor may be configured to communicate with at least one of a UE, a network, and an autonomous vehicle other than a vehicle in which the UE is included.

According to various embodiments, a method performed by a base station in a wireless communication system may be provided.

According to various embodiments, the method may include: transmitting PUSCH configuration information related to a plurality of periodically configured PUSCH resources; transmitting one or more PRSs, wherein the one or more PRSs may be transmitted on at least one of one or more PRS resources or one or more PRS resource sets including the one or more PRS resources; and receiving information on one or more measurement reports in response to the one or more PRSs.

According to various embodiments, the information on the one or more measurement reports may be received on one or more PUSCH resources among the plurality of PUSCH resources.

According to various embodiments, before receiving the information on the one or more measurement reports, activation information for identifying the one or more PUSCH resources for receiving the information on the one or more measurement reports may be received.

According to various embodiments, a base station operating in a wireless communication system may be provided.

According to various embodiments, the base station may include a transceiver, and at least one processor coupled with the transceiver.

According to various embodiments, the at least one processor may be configured to: transmit PUSCH configuration information related to a plurality of periodically configured PUSCH resources; transmit one or more PRSs, wherein the one or more PRSs may be transmitted on at least one of one or more PRS resources or one or more PRS resource sets including the one or more PRS resources; and receive information on one or more measurement reports in response to the one or more PRSs.

According to various embodiments, the information on the one or more measurement reports may be received on one or more PUSCH resources among the plurality of PUSCH resources.

According to various embodiments, before receiving the information on the one or more measurement reports, activation information for identifying the one or more PUSCH resources for receiving the information on the one or more measurement reports may be received.

According to various embodiments, an apparatus operating in a wireless communication system may be provided.

According to various embodiments, the apparatus may include at least one processor, and at least one memory storing at least one instruction to cause the at least one processor to perform operations.

According to various embodiments, the operations may include: receiving PUSCH configuration information related to a plurality of periodically configured PUSCH resources; receiving one or more PRSs, wherein the one or more PRSs may be received on at least one of one or more PRS resources or one or more PRS resource sets including the one or more PRS resources; and transmitting information on one or more measurement reports obtained from the one or more PRSs.

According to various embodiments, the information on the one or more measurement reports may be transmitted on one or more PUSCH resources among the plurality of PUSCH resources.

Before transmitting the information on the one or more measurement reports, the apparatus may transmit activation information for identifying the one or more PUSCH resources for transmitting the information on the one or more measurement reports.

According to various embodiments, there may be provided a non-transitory processor-readable medium configured to store one or more instructions that cause at least one processor to perform operations.

According to various embodiments, the operations may include: receiving PUSCH configuration information related to a plurality of periodically configured PUSCH resources; receiving one or more PRSs, wherein the one or more PRSs may be received on at least one of one or more PRS resources or one or more PRS resource sets including the one or more PRS resources; and transmitting information on one or more measurement reports obtained from the one or more PRSs.

According to various embodiments, the information on the one or more measurement reports may be transmitted on one or more PUSCH resources among the plurality of PUSCH resources.

According to various embodiments, before transmitting the information on the one or more measurement reports, activation information for identifying the one or more PUSCH resources for transmitting the information on the one or more measurement reports may be transmitted.

It is to be understood that both the foregoing general description and the following detailed description of the present disclosure are exemplary and explanatory and are intended to provide further explanation of the disclosure as claimed.

**ADVANTAGEOUS EFFECTS**

According to various embodiments, a signal may be effectively transmitted and received in a wireless communication system.

According to various embodiments, positioning may be effectively performed in a wireless communication system.

According to various embodiments, positioning latency in a wireless communication system may be reduced.

According to various embodiments, positioning of user equipments (UEs) in radio resource control (RRC) idle/inactive/connected states may be supported.

It will be appreciated by persons skilled in the art that the effects that can be achieved with various embodiments is not limited to what has been particularly described hereinabove and other advantages of various embodiments will be more clearly understood from the following detailed description taken in conjunction with the accompanying drawings.

**BRIEF DESCRIPTION OF THE DRAWINGS**

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 is a diagram illustrating physical channels and a signal transmission method using the physical channels, which may be used in various embodiments;

FIG. 2 is a diagram illustrating a radio frame structure in a new radio access technology (NR) system to which various embodiments are applicable;

FIG. 3 is a diagram illustrating mapping of physical channels in a slot, to which various embodiments are applicable;

FIG. 4 is a diagram illustrating mapping of physical channels in a slot, to which various embodiments are applicable;

FIG. 5 is a diagram illustrating exemplary UL grants to which various embodiments are applicable;

FIG. 6 is a diagram illustrating an exemplary positioning protocol configuration for user equipment (UE) positioning, which is applicable to various embodiments;

FIG. 7 is a diagram illustrating an example of an architecture of a system for positioning a UE, to which various embodiments are applicable;

FIG. 8 is a diagram illustrating an example of a procedure of positioning a UE, to which various embodiments are applicable;

FIG. 9 is a diagram illustrating protocol layers for supporting LTE positioning protocol (LPP) message transmission, to which various embodiments are applicable;

FIG. 10 is a diagram illustrating protocol layers for supporting NR positioning protocol A (NRPPa) protocol data unit (PDU) transmission, to which various embodiments are applicable;

FIG. 11 is a diagram illustrating an observed time difference of arrival (OTDOA) positioning method, to which various embodiments are applicable;

FIG. 12 is a diagram illustrating a multi-round trip time (multi-RTT) positioning method to which various embodiments are applicable;

FIG. 13 is a simplified diagram illustrating a method of operating a UE, a transmission and reception point (TRP), a location server, and/or a location management function (LMF) according to various embodiments;

FIG. 14 is a simplified diagram illustrating a method of operating a UE, a TRP, a location server, and/or an LMF according to various embodiments;

FIG. 15 is a diagram illustrating an exemplary positioning procedure in terms of physical layers applicable to various embodiments;

FIG. 16 is a diagram illustrating an exemplary method of activating configured grant resources for measurement reporting according to various embodiments;

FIG. 17 is a diagram illustrating an exemplary method of activating configured grant resources for measurement reporting according to various embodiments;

FIG. 18 is a diagram illustrating an exemplary method of activating configured grant resources for measurement reporting according to various embodiments;

FIG. 19 is a diagram schematically illustrating a method of operating a UE and a network node according to various embodiments;

FIG. 20 is a flowchart illustrating a method of operating the UE according to various embodiments;

FIG. 21 is a flowchart illustrating a method of operating the network node according to various embodiments;

FIG. 22 is a block diagram illustrating an apparatus for implementing various embodiments of the present disclosure;

FIG. 23 illustrates an exemplary communication system to which various embodiments of the present disclosure are applied;

FIG. 24 illustrates exemplary wireless devices to which various embodiments of the present disclosure are applicable;

FIG. 25 illustrates other exemplary wireless devices to which various embodiments of the present disclosure are applied;

FIG. 26 illustrates an exemplary portable device to which various embodiments of the present disclosure are applied; and

FIG. 27 illustrates an exemplary vehicle or autonomous driving vehicle to which various embodiments of the present disclosure.

## DETAILED DESCRIPTION

The embodiment is applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

Various embodiments are described in the context of a 3GPP communication system (e.g., including LTE, NR, 6G, and next-generation wireless communication systems) for clarity of description, to which the technical spirit of various embodiments is not limited. For the background art, terms, and abbreviations used in the description of various embodiments, refer to the technical specifications published before the present disclosure. For example, the documents of 3GPP TS 36.211, 3GPP TS 36.212, 3GPP TS 36.213, 3GPP TS 36.300, 3GPP TS 36.321, 3GPP TS 36.331, 3GPP TS 36.355, 3GPP TS 36.455, 3GPP TS 37.355, 3GPP TS 37.455, 3GPP TS 38.211, 3GPP TS 38.212, 3GPP TS 38.213, 3GPP TS 38.214, 3GPP TS 38.215, 3GPP TS 38.300, 3GPP TS 38.321, 3GPP TS 38.331, 3GPP TS 38.355, 3GPP TS 38.455, and so on may be referred to.

## 1. 3GPP System

### 1.1. Physical Channels and Signal Transmission and Reception

In a wireless access system, a UE receives information from a base station on a downlink (DL) and transmits information to the base station on an uplink (UL). The information transmitted and received between the UE and the base station includes general data information and various types of control information. There are many physical channels according to the types/usages of information transmitted and received between the base station and the UE.

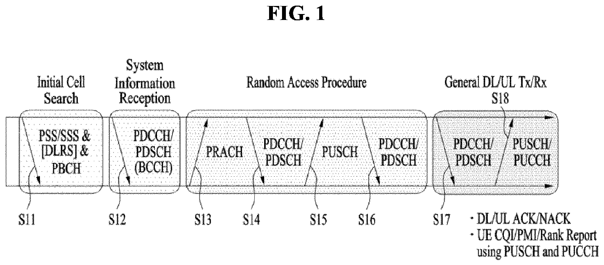

FIG. 1 is a diagram illustrating physical channels and a signal transmission method using the physical channels, which may be used in various embodiments.

When powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

Aside from the above 4-step random access procedure (4-step RACH procedure or type-1 random access procedure), when the random access procedure is performed in two steps (2-step RACH procedure or type-2 random access procedure), steps S13 and S15 may be performed as one UE transmission operation (e.g., an operation of transmitting message A (MsgA) including a PRACH preamble and/or a PUSCH), and steps S14 and S16 may be performed as one BS transmission operation (e.g., an operation of transmitting message B (MsgB) including an RAR and/or contention resolution information)

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure.

Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc.

In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

### 1.2. Physical Resource

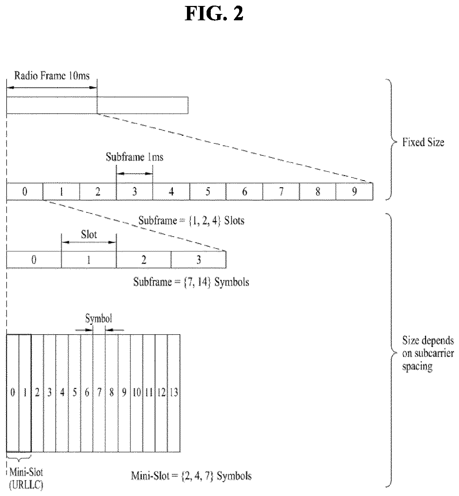

FIG. 2 is a diagram illustrating a radio frame structure in a new radio access technology (NR) system to which various embodiments are applicable.

The NR system may support multiple numerologies. A numerology may be defined by a subcarrier spacing (SCS) and a cyclic prefix (CP) overhead. Multiple SCSs may be derived by scaling a default SCS by an integer N (or

μ). Further, even though it is assumed that a very small SCS is not used in a very high carrier frequency, a numerology to be used may be selected independently of the frequency band of a cell. Further, the NR system may support various frame structures according to multiple numerologies.

Now, a description will be given of OFDM numerologies and frame structures which may be considered for the NR system. Multiple OFDM numerologies supported by the NR system may be defined as listed in Table 1. For a bandwidth part, μ and a CP are obtained from RRC parameters provided by the BS.

[Table 1]

| $\mu$ | $\Delta f = 2^{\mu} \cdot 15$[kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

In NR, multiple numerologies (e.g., SCSs) are supported to support a variety of 5G services. For example, a wide area in cellular bands is supported for an SCS of 15 kHz, a dense-urban area, a lower latency, and a wider carrier bandwidth are supported for an SCS of 30/60 kHz, and a larger bandwidth than 24.25 GHz is supported for an SCS of 60 kHz or more, to overcome phase noise.

An NR frequency band is defined by two types of frequency ranges, FR1 and FR2. FR1 may be a sub-6 GHz range, and FR2 may be an above-6 GHz range, that is, a millimeter wave (mmWave) band.

Table 2 below defines the NR frequency band, by way of example.

[Table 2]

| Frequency range designation | Corresponding frequency range | Subcarrier Spacing |
|---|---|---|
| FR1 | 410 MHz - 7125 MHz | 15, 30, 60kHz |
| FR2 | 24250 MHz - 52600 MHz | 60, 120, 240kHz |

Regarding a frame structure in the NR system, the time-domain sizes of various fields are represented as multiples of a basic time unit for NR, Tc = 1/(Δfmax*Nf) where Δfmax = 480* 103 Hz and a value Nf related to a fast Fourier transform (FFT) size or an inverse fast Fourier transform (IFFT) size is given as Nf = 4096. Tc and Ts which is an LTE-based time unit and sampling time, given as Ts = 1/((15 kHz)*2048) are placed in the following relationship: Ts/Tc = 64. DL and UL transmissions are organized into (radio) frames each having a duration of Tf = (Δfmax*Nf/100)*Tc = 10ms. Each radio frame includes 10 subframes each having a duration of Tsf = (Δfmax*Nf/1000)*Tc = 1ms. There may exist one set of frames for UL and one set of frames for DL. For a numerology μ, slots are numbered with nμs E {0,...,Nslot,μsubframe-1} in an increasing order in a subframe, and with nμs,f E {0,...,Nslot,μframe-1} in an increasing order in a radio frame. One slot includes Nμsymb consecutive OFDM symbols, and Nμsymb depends on a CP. The start of a slot nμs in a subframe is aligned in time with the start of an OFDM symbol nμs*Nμsymb in the same subframe.

Table 3 lists the number of symbols per slot, the number of slots per frame, and the number of slots per subframe, for each SCS in a normal CP case, and Table 4 lists the number of symbols per slot, the number of slots per frame, and the number of slots per subframe, for each SCS in an extended CP case.

[Table 3]

| $\mu$ | $N^{\text{slot}}_{\text{symb}}$ | $N^{\text{frame},\mu}_{\text{slot}}$ | $N^{\text{subframe},\mu}_{\text{slot}}$ |
|---|---|---|---|
| 0 | 14 | 10 | 1 |
| 1 | 14 | 20 | 2 |
| 2 | 14 | 40 | 4 |
| 3 | 14 | 80 | 8 |

(continued)

| $\mu$ | $N_{symb}^{slot}$ | $N_{slot}^{frame,\mu}$ | $N_{slot}^{subframe,\mu}$ |
|---|---|---|---|
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In the above tables, $N_{symb}^{slot}$ represents the number of symbols in a slot, $N_{slot}^{frame,\mu}$ represents the number of slots in a frame, and $N_{slot}^{subframe,\mu}$ represents the number of slots in a subframe.

In the NR system to which various embodiments are applicable, different OFDM(A) numerologies (e.g., SCSs, CP lengths, and so on) may be configured for a plurality of cells which are aggregated for one UE. Accordingly, the (absolute time) period of a time resource including the same number of symbols (e.g., a subframe (SF), a slot, or a TTI) (generically referred to as a time unit (TU), for convenience) may be configured differently for the aggregated cells.

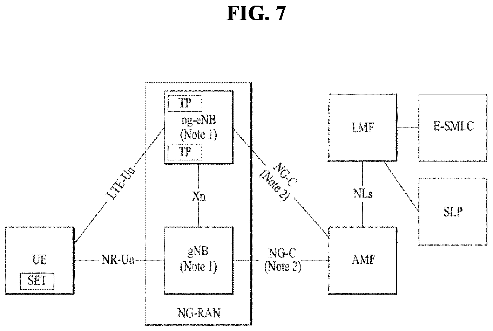

FIG. 2 illustrates an example with $\mu$=2 (i.e., an SCS of 60 kHz), in which referring to Table 6, one subframe may include four slots. One subframe = {1, 2, 4} slots in FIG. 7, which is exemplary, and the number of slot(s) which may be included in one subframe is defined as listed in Table 3 or Table 4.

Further, a mini-slot may include 2, 4 or 7 symbols, fewer symbols than 2, or more symbols than 7.

Regarding physical resources in the NR system, antenna ports, a resource grid, resource elements (REs), resource blocks (RBs), carrier parts, and so one may be considered. The physical resources in the NR system will be described below in detail.

An antenna port is defined such that a channel conveying a symbol on an antenna port may be inferred from a channel conveying another symbol on the same antenna port. When the large-scale properties of a channel carrying a symbol on one antenna port may be inferred from a channel carrying a symbol on another antenna port, the two antenna ports may be said to be in a quasi-co-located or quasi-co-location (QCL) relationship. The large-scale properties include one or more of delay spread, Doppler spread, frequency shift, average received power, received timing, average delay, and a spatial reception (Rx) parameter. The spatial Rx parameter refers to a spatial (Rx) channel property parameter such as an angle of arrival.

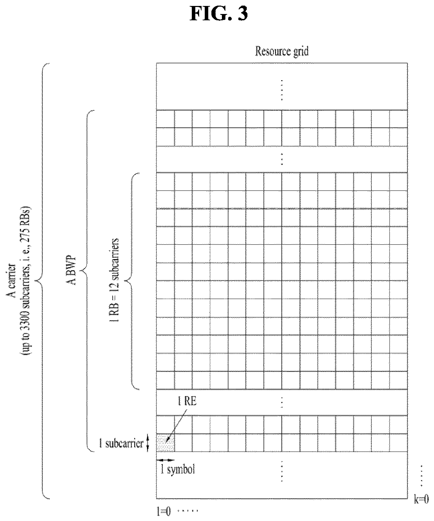

FIG. 3 illustrates an exemplary resource grid to which various embodiments are applicable.

Referring to FIG. 3, for each subcarrier spacing (SCS) and carrier, a resource grid is defined as $14 \times 2^\mu$ OFDM symbols by $N_{grid}^{size,\mu} \times N_{SC}^{RB}$ subcarriers, where $N_{grid}^{size,\mu}$ is indicated by RRC signaling from the BS. $N_{grid}^{size,\mu}$ may vary according to an SCS configuration $\mu$ and a transmission direction, UL or DL. There is one resource grid for an SCS configuration $\mu$, an antenna port p, and a transmission direction (UL or DL). Each element of the resource grid for the SCS configuration $\mu$ and the antenna port p is referred to as an RE and uniquely identified by an index pair (k, l) where k represents an index in the frequency domain, and l represents a symbol position in the frequency domain relative to a reference point. The RE (k, l) for the SCS configuration and the antenna port p corresponds to a physical resource and a complex $a_{k,l}^{(p,\mu)}$. An RB is defined as $N_{SC}^{RB} = 12$ consecutive subcarriers in the frequency domain.

Considering that the UE may not be capable of supporting a wide bandwidth supported in the NR system, the UE may be configured to operate in a part (bandwidth part (BWP)) of the frequency bandwidth of a cell.

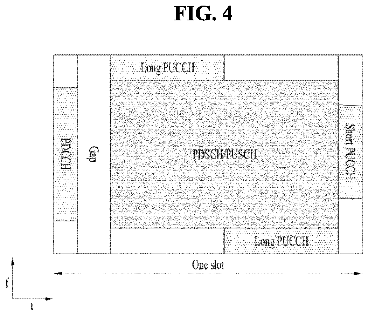

FIG. 4 is a diagram illustrating exemplary mapping of physical channels in a slot, to which various embodiments are applicable.

One slot may include all of a DL control channel, DL or UL data, and a UL control channel. For example, the first N symbols of a slot may be used to transmit a DL control channel (hereinafter, referred to as a DL control region), and the last M symbols of the slot may be used to transmit a UL control channel (hereinafter, referred to as a UL control region). Each of N and M is an integer equal to or larger than 0. A resource area (hereinafter, referred to as a data region) between the DL control region and the UL control region may be used to transmit DL data or UL data. There may be a time gap for DL-to-UL or UL-to-DL switching between a control region and a data region. A PDCCH may be transmitted in the DL control region, and a PDSCH may be transmitted in the DL data region. Some symbols at a DL-to-UL switching time in the slot may be used as the time gap.

The BS transmits related signals to the UE on DL channels as described below, and the UE receives the related signals from the BS on the DL channels.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping are performed on a codeword basis, and modulation symbols generated from each codeword are mapped to one or more layers (layer mapping). Each layer together with a demodulation reference signal (DMRS) is mapped to resources, generated as an OFDM symbol signal, and transmitted through a corresponding antenna port.

The PDCCH may deliver downlink control information (DCI), for example, DL data scheduling information, UL data scheduling information, and so on. The PUCCH may deliver uplink control information (UCI), for example, an acknowledgement/negative acknowledgement (ACK/NACK) information for DL data, channel state information (CSI), a scheduling request (SR), and so on.

The PDCCH carries downlink control information (DCI) and is modulated in quadrature phase shift keying (QPSK). One PDCCH includes 1, 2, 4, 8, or 16 control channel elements (CCEs) according to an aggregation level (AL). One CCE includes 6 resource element groups (REGs). One REG is defined by one OFDM symbol by one (P)RB.

The PDCCH is transmitted in a control resource set (CORESET). A CORESET is defined as a set of REGs having a given numerology (e.g., SCS, CP length, and so on). A plurality of CORESETs for one UE may overlap with each other in the time/frequency domain. A CORESET may be configured by system information (e.g., a master information block

(MIB)) or by UE-specific higher layer (RRC) signaling. Specifically, the number of RBs and the number of symbols (up to 3 symbols) included in a CORESET may be configured by higher-layer signaling.

The UE acquires DCI delivered on a PDCCH by decoding (so-called blind decoding) a set of PDCCH candidates. A set of PDCCH candidates decoded by a UE are defined as a PDCCH search space set. A search space set may be a common search space (CSS) or a UE-specific search space (USS). The UE may acquire DCI by monitoring PDCCH candidates in one or more search space sets configured by an MIB or higher-layer signaling.

The UE transmits related signals on later-described UL channels to the BS, and the BS receives the related signals on the UL channels from the UE.

The PUSCH delivers UL data (e.g., a UL-shared channel transport block (UL-SCH TB)) and/or UCI, in cyclic prefix-orthogonal frequency division multiplexing (CP-OFDM) waveforms or discrete Fourier transform-spread-orthogonal division multiplexing (DFT-s-OFDM) waveforms. If the PUSCH is transmitted in DFT-s-OFDM waveforms, the UE transmits the PUSCH by applying transform precoding. For example, if transform precoding is impossible (e.g., transform precoding is disabled), the UE may transmit the PUSCH in CP-OFDM waveforms, and if transform precoding is possible (e.g., transform precoding is enabled), the UE may transmit the PUSCH in CP-OFDM waveforms or DFT-s-OFDM waveforms. The PUSCH transmission may be scheduled dynamically by a UL grant in DCI or semi-statically by higher-layer signaling (e.g., RRC signaling) (and/or layer 1 (L1) signaling (e.g., a PDCCH)) (a configured grant). The PUSCH transmission may be performed in a codebook-based or non-codebook-based manner.

The PUCCH delivers UCI, an HARQ-ACK, and/or an SR and is classified as a short PUCCH or a long PUCCH according to the transmission duration of the PUCCH.

## 1.3. Uplink Grant

UL grants may be classified into (1) dynamic grants and (2) configured grants.

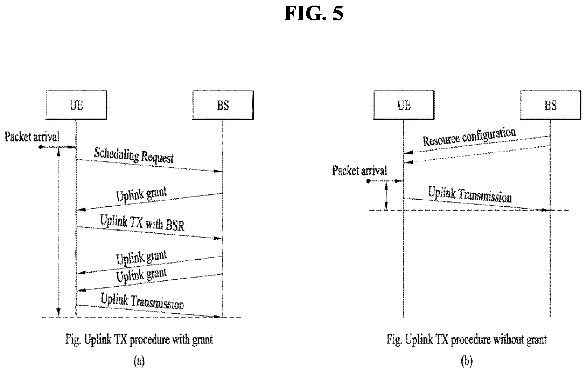

FIG. 5 is a diagram illustrating exemplary UL grants to which various embodiments are applicable. FIG. 5(a) illustrates a UL transmission process based on a dynamic grant, and FIG. 5(b) illustrates a UL transmission process based on a configured grant.

A dynamic grant refers to a data transmission/reception method based on dynamic scheduling by the BS, which aims at maximizing resource utilization. This means that when the UE has data to transmit, the UE first requests UL resource allocation from the BS and then transmits data on only the UL resources allocated by the BS. For efficient use of UL radio resources, the BS needs to know the type and amount of data transmitted by each UE in UL. Accordingly, the UE may transmit information on UL data that the UE intends to transmit to the BS, and the BS may allocate UL resources to the corresponding UE based thereon. In this case, information on UL data transmitted by the UE to the BS may correspond to the amount of UL data stored in the buffer of the UE, which is referred to as a buffer status report (BSR).

FIG. 5(a) illustrates a process for allocating UL resources for actual data when the UE has no UL radio resources for transmitting a BSR. For example, if there are no UL grants for UL data transmission, it may be difficult for the UE to transmit a BSR over a PUSCH. Thus, the UE needs to transmit an SR over a PUCCH to request resources for UL data. In this case, the UL resource allocation process may be performed at 5 stages.

Referring to FIG. 5(a), when there are no PUSCH resources for transmitting the BSR, the UE first transmits the SR to the BS to request PUSCH resource allocation. The SR is used by the UE to request the BS to allocate PUSCH resources for UL transmission when a reporting event is triggered but the UE has no available PUSCH resources. Depending on whether the UE has valid PUCCH resources available for the SR, the UE transmits the SR on the PUCCH or initiates a random access procedure. When the UE receives a UL grant from the BS, the UE transmits the BSR to the BS on a PUSCH resource allocated based on the UL grant. The BS checks the amount of data to be transmitted by the UE in UL based on the BSR and then transmits the UL grant to the UE. Upon receiving the UL grant, the UE transmits actual UL data to the BS over the PUSCH.

Referring to FIG. 5(b), the UE receives from the BS an RRC message including a resource configuration for UL data transmission. In NR systems, there are two types of UL configured grants: Type 1 and Type 2. For the UL configured grant type 1, an actual UL grant (e.g., time resource, frequency resource, etc.) is provided by RRC signaling. For UL configured grant type 2, an actual UL grant is provided by a PDCCH and is activated or deactivated by the PDCCH. When configured grant type 1 is configured, at least the following parameters are provided to the UE via RRC signaling from the BS: configured scheduling radio network temporary identifier (CS-RNTI) for retransmission; periodicity for configured grant type 1; information on starting symbol index (S) and symbol length (L) for PUSCH within slot; time-domain offset representing offset of resources for SFN = 0 in time domain; and modulation and coding scheme (MCS) index indicating modulation order, target code rate, and transport block size. When configured grant type 2 is configured, at least the following parameters are provided to the UE via RRC signaling from the BS: CS-RNTI for activation, deactivation, and retransmission; and periodicity for configured grant type 2. The actual UL grant of configured grant type 2 is provided to the UE in DCI on a PDCCH addressed with a CS-RNTI. If specific fields of the DCI on the PDCCH addressed with the CS-RNTI are set to specific values for scheduling activation, the UE activates configured grant type 2 associated with the CS-RNTI.

The UE may perform UL transmission on a PUSCH based on configured grant Type 1 or Type 2.

Resources for initial transmission based on the configured grant may or may not be shared between one or more UEs.

## 2. Positioning

Positioning may refer to determining the geographical position and/or velocity of the UE based on measurement of radio signals. Location information may be requested by and reported to a client (e.g., an application) associated with to the UE. The location information may also be requested by a client within or connected to a core network. The location information may be reported in standard formats such as formats for cell-based or geographical coordinates, together with estimated errors of the position and velocity of the UE and/or a positioning method used for positioning.

### 2.1. Positioning Protocol configuration

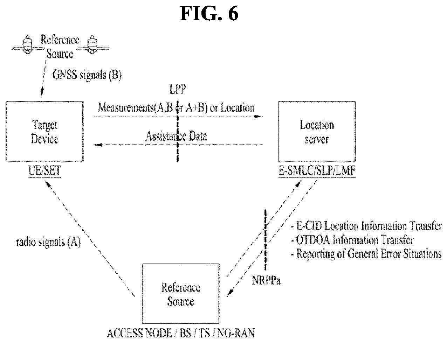

FIG. 6 is a diagram illustrating an exemplary positioning protocol configuration for positioning a UE, to which various embodiments are applicable.

Referring to FIG. 6, an LTE positioning protocol (LPP) may be used as a point-to-point protocol between a location server (E-SMLC and/or SLP and/or LMF) and a target device (UE and/or SET), for positioning the target device using position-related measurements obtained from one or more reference resources. The target device and the location server may exchange measurements and/or location information based on signal A and/or signal B over the LPP.

NRPPa may be used for information exchange between a reference source (access node and/or BS and/or TP and/or NG-RAN node) and the location server.

The NRPPa protocol may provide the following functions.

- E-CID Location Information Transfer. This function allows the reference source to exchange location information with the LMF for the purpose of E-CID positioning.
- OTDOA Information Transfer. This function allows the reference source to exchange information with the LMF for the purpose of OTDOA positioning.
- Reporting of General Error Situations. This function allows reporting of general error situations, for which function-specific error messages have not been defined.

### 2.2. PRS (positioning reference signal)

For such positioning, a positioning reference signal (PRS) may be used. The PRS is a reference signal used to estimate the position of the UE.

A positioning frequency layer may include one or more PRS resource sets, each including one or more PRS resources.

## Sequence generation

A PRS sequence $r(m)$ ($m$ = 0, 1, ...) may be defined by Equation 1.

[Equation 1]

$$r(m) = \frac{1}{\sqrt{2}}\big(1 - 2c(m)\big) + j\frac{1}{\sqrt{2}}\big(1 - 2c(m + 1)\big)$$

In Equation 1, c(i) may be a pseudo-random sequence. A pseudo-random sequence generator may be initialized by Equation 2.

[Equation 2]

$$c_{\text{init}} = \left( 2^{22}\left\lfloor \frac{n_{\text{ID,seq}}^{\text{PRS}}}{1024} \right\rfloor + 2^{10}\big(N_{\text{symb}}^{\text{slot}}n_{\text{s,f}}^{\mu} + l + 1\big)\big(2\big(n_{\text{ID,seq}}^{\text{PRS}} \bmod 1024\big) + 1\big) \right.$$

$$\left. + \big(n_{\text{ID,seq}}^{\text{PRS}} \bmod 1024\big) \right) \bmod 2^{31}$$

$n_{\text{s,f}}^{\mu}$ may be a slot number in a frame in an SCS configuration μ. A DL PRS sequence ID $n_{\text{ID,seq}}^{\text{PRS}} \in \{0,1,...,4095\}$ may be given by a higher-layer parameter (e.g., DL-PRS-SequenceId). I may be an OFDM symbol in a slot to which the sequence is mapped.

## Mapping to physical resources in a DL PRS resource

A PRS sequence $r(m)$ may be scaled by $\beta_{\text{PRS}}$ and mapped to REs $(k, l)_{p,\mu}$, $(k, l)_{p,\mu}$ specifically by Equation 3. may represent an RE (k, l) for an antenna port p and the SCS configuration μ.

[Equation 3]

$$a_{k,l}^{(p,\mu)} = \beta_{\text{PRS}}\, r(m)$$

$$m = 0, 1, ...$$

$$k = mK_{\text{comb}}^{\text{PRS}} + \left(\big(k_{\text{offset}}^{\text{PRS}} + k'\big) \bmod K_{\text{comb}}^{\text{PRS}}\right)$$

$$l = l_{\text{start}}^{\text{PRS}}, l_{\text{start}}^{\text{PRS}} + 1, ..., l_{\text{start}}^{\text{PRS}} + L_{\text{PRS}} - 1$$

Herein, the following conditions may have to be satisfied:

- The REs $(k, l)_{p,\mu}$ are included in an RB occupied by a DL PRS resource configured for the UE;
- The symbol I not used by any SS/PBCH block used by a serving cell for a DL PRS transmitted from the serving cell or indicated by a higher-layer parameter SSB-positionInBurst for a DL PRS transmitted from a non-serving cell;

- A slot number satisfies the following PRS resource set-related condition;

$l_{\text{start}}^{\text{PRS}}$ is the first symbol of the DL PRS in the slot, which may be given by a higher-layer parameter DL-PRS-ResourceSymbolOffset. The time-domain size of the DL PRS resource, $L_{\text{PRS}} \in \{2,4,6,12\}$ may be given by a higher-layer parameter DL-PRS-NumSymbols. A comb size $K_{\text{comb}}^{\text{PRS}} \in \{2, 4, 6, 12\}$ may be given by a higher-layer parameter transmissionComb. A combination { $L_{\text{PRS}}, K_{\text{comb}}^{\text{PRS}}$ } of $L_{\text{PRS}}$ and $K_{\text{comb}}^{\text{PRS}}$ may be one of {2, 2}, {4, 2}, {6, 2}, {12, 2}, {4, 4}, {12, 4}, {6, 6}, {12, 6} and/or {12, 12}. An RE offset $k_{\text{offset}}^{\text{PRS}} \in \left\{0,1,\dots,K_{\text{comb}}^{\text{PRS}} - 1\right\}$ may be given by combOffset. A frequency offset $k'$ may be a function of $l - l_{\text{start}}^{\text{PRS}}$ as shown in Table 5.

[Table 5]

| $K_{\text{comb}}^{\text{PRS}}$ | Symbol number within the downlink PRS resource $l - l_{\text{start}}^{\text{PRS}}$ | | | | | | | | | | | |
| --- | --- | --- | --- | --- | --- | --- | --- | --- | --- | --- | --- | --- |
| | 0 | 1 | 2 | 3 | 4 | 5 | 8 | 7 | 8 | 9 | 10 | 11 |
| 2 | 0 | 1 | 0 | 1 | 0 | 1 | 0 | 1 | 0 | 1 | 0 | 1 |
| 4 | 0 | 2 | 1 | 3 | 0 | 2 | 1 | 3 | 0 | 2 | 1 | 3 |
| 6 | 0 | 3 | 1 | 4 | 2 | 5 | 0 | 3 | 1 | 4 | 2 | 5 |
| 12 | 0 | 6 | 3 | 9 | 1 | 7 | 4 | 10 | 2 | 8 | 5 | 11 |

A reference point for k=0 may be the position of point A in a positioning frequency layer in which the DL PRS resource is configured. Point A may be given by a higher-layer parameter dl-PRS-PointA-r16.

Mapping to slots in a DL PRS resource set

A DL PRS resource included in a DL PRS resource set may be transmitted in a slot and a frame which satisfy the following Equation 4.

[Equation 4]

$$\left(N_{\text{slot}}^{\text{frame},\mu} n_{\text{f}} + n_{\text{s,f}}^{\mu} - T_{\text{offset}}^{\text{PRS}} - T_{\text{offset,res}}^{\text{PRS}}\right) \bmod 2^{\mu} T_{\text{per}}^{\text{PRS}} \in \left\{iT_{\text{gap}}^{\text{PRS}}\right\}_{i=0}^{T_{\text{rep}}^{\text{PRS}}-1}$$

$N_{\text{slot}}^{\text{frame},\mu}$ may be the number of slots per frame in the SCS configuration $\mu$. $n_{\text{f}}$ may be a system frame number (SFN). $n_{\text{s,f}}^{\mu}$ may be a slot number in a frame in the SCS configuration $\mu$. A slot offset $T_{\text{offset}}^{\text{PRS}} \in \left\{0,1,\dots,T_{\text{per}}^{\text{PRS}} - 1\right\}$ may be given by a higher-layer parameter *DL-PRS-ResourceSetSlotOffset*. A DL PRS resource slot offset $T_{\text{offset,res}}^{\text{PRS}}$ may be given by a higher layer parameter *DL-PRS-ResourceSlotOffset*. A periodicity $T_{\text{per}}^{\text{PRS}} \in \{4, 5, 8, 10, 16, 20, 32, 40, 64, 80, 160, 320, 640, 1280, 2560, 5120, 10240\}$ may be given by a higher-layer parameter *DL-PRS-Periodicity*. A repetition factor $T_{\text{rep}}^{\text{PRS}} \in \{1,2,4,6,8,16,32\}$ may be given by a higher-layer parameter DL-PRS-ResourceRepetitionFactor. A muting repetition factor $T_{\text{muting}}^{\text{PRS}}$ may be given by a higher-layer parameter *DL-*

*PRS-MutingBitRepetitionFactor.* A time gap $T_{\text{gap}}^{\text{PRS}} \in \{1,2,4,8,16,32\}$ may be given by a higher-layer parameter *DL-PRS-ResourceTimeGap.*

### 2.3. UE Positioning Architecture

FIG. 7 illustrates an exemplary system architecture for measuring positioning of a UE to which various embodiments are applicable.

Referring to FIG. 7, an AMF may receive a request for a location service associated with a particular target UE from another entity such as a gateway mobile location center (GMLC) or the AMF itself decides to initiate the location service on behalf of the particular target UE. Then, the AMF transmits a request for a location service to a location management function (LMF). Upon receiving the request for the location service, the LMF may process the request for the location service and then returns the processing result including the estimated position of the UE to the AMF. In the case of a location service requested by an entity such as the GMLC other than the AMF, the AMF may transmit the processing result received from the LMF to this entity.

A new generation evolved-NB (ng-eNB) and a gNB are network elements of the NG-RAN capable of providing a measurement result for positioning. The ng-eNB and the gNB may measure radio signals for a target UE and transmits a measurement result value to the LMF. The ng-eNB may control several TPs, such as remote radio heads, or PRS-only TPs for support of a PRS-based beacon system for E-UTRA.

The LMF is connected to an enhanced serving mobile location center (E-SMLC) which may enable the LMF to access the E-UTRAN. For example, the E-SMLC may enable the LMF to support OTDOA, which is one of positioning methods of the E-UTRAN, using DL measurement obtained by a target UE through signals transmitted by eNBs and/or PRS-only TPs in the E-UTRAN.

The LMF may be connected to an SUPL location platform (SLP). The LMF may support and manage different location services for target UEs. The LMF may interact with a serving ng-eNB or a serving gNB for a target UE in order to obtain position measurement for the UE. For positioning of the target UE, the LMF may determine positioning methods, based on a location service (LCS) client type, required quality of service (QoS), UE positioning capabilities, gNB positioning capabilities, and ng-eNB positioning capabilities, and then apply these positioning methods to the serving gNB and/or serving ng-eNB. The LMF may determine additional information such as accuracy of the location estimate and velocity of the target UE. The SLP is a secure user plane location (SUPL) entity responsible for positioning over a user plane.

The UE may measure the position thereof using DL RSs transmitted by the NG-RAN and the E-UTRAN. The DL RSs transmitted by the NG-RAN and the E-UTRAN to the UE may include a SS/PBCH block, a CSI-RS, and/or a PRS. Which DL RS is used to measure the position of the UE may conform to configuration of LMF/E-SMLC/ng-eNB/E-UTRAN etc. The position of the UE may be measured by an RAT-independent scheme using different global navigation satellite systems (GNSSs), terrestrial beacon systems (TBSs), WLAN access points, Bluetooth beacons, and sensors (e.g., barometric sensors) installed in the UE. The UE may also contain LCS applications or access an LCS application through communication with a network accessed thereby or through another application contained therein. The LCS application may include measurement and calculation functions needed to determine the position of the UE. For example, the UE may contain an independent positioning function such as a global positioning system (GPS) and report the position thereof, independent of NG-RAN transmission. Such independently obtained positioning information may be used as assistance information of positioning information obtained from the network.

### 2.4. Operation for UE Positioning

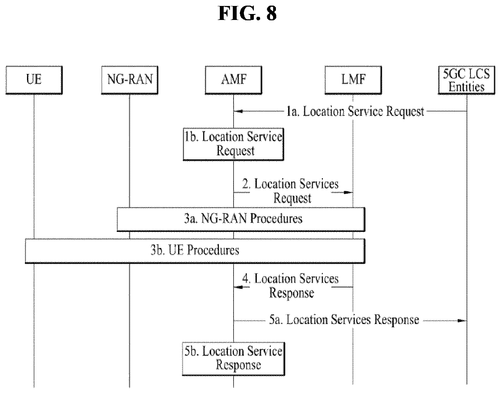

FIG. 8 illustrates an implementation example of a network for UE positioning to which various embodiments are applicable.

When an AMF receives a request for a location service in the case in which the UE is in connection management (CM)-IDLE state, the AMF may make a request for a network triggered service in order to establish a signaling connection with the UE and to assign a specific serving gNB or ng-eNB. This operation procedure is omitted in FIG. 8. In other words, in FIG. 8 it may be assumed that the UE is in a connected mode. However, the signaling connection may be released by an NG-RAN as a result of signaling and data inactivity while a positioning procedure is still ongoing.

An operation procedure of the network for UE positioning will now be described in detail with reference to FIG. 8. In step 1a, a 5GC entity such as GMLC may transmit a request for a location service for measuring the position of a target UE to a serving AMF. Here, even when the GMLC does not make the request for the location service, the serving AMF may determine the need for the location service for measuring the position of the target UE according to step 1b. For example, the serving AMF may determine that itself will perform the location service in order to measure the position of the UE for an emergency call.

In step 2, the AMF transfers the request for the location service to an LMF. In step 3a, the LMF may initiate location procedures with a serving ng-eNB or a serving gNB to obtain location measurement data or location measurement assistance data. For example, the LMF may transmit a request for location related information associated with one or more UEs to the NG-RAN and indicate the type of necessary location information and associated QoS. Then, the NG-RAN may transfer the location related information to the LMF in response to the request. In this case, when a location determination method according to the request is an enhanced cell ID (E-CID) scheme, the NG-RAN may transfer additional location related information to the LMF in one or more NR positioning protocol A (NRPPa) messages. Here, the "location related information" may mean all values used for location calculation such as actual location estimate information and radio measurement or location measurement. Protocol used in step 3a may be an NRPPa protocol which will be described later.

Additionally, in step 3b, the LMF may initiate a location procedure for DL positioning together with the UE. For example, the LMF may transmit the location assistance data to the UE or obtain a location estimate or location measurement value. For example, in step 3b, a capability information transfer procedure may be performed. Specifically, the LMF may transmit a request for capability information to the UE and the UE may transmit the capability information to the LMF. Here, the capability information may include information about a positioning method supportable by the LFM or the UE, information about various aspects of a particular positioning method, such as various types of assistance data for an A-GNSS, and information about common features not specific to any one positioning method, such as ability to handle multiple LPP transactions. In some cases, the UE may provide the capability information to the LMF although the LMF does not transmit a request for the capability information.

As another example, in step 3b, a location assistance data transfer procedure may be performed. Specifically, the UE may transmit a request for the location assistance data to the LMF and indicate particular location assistance data needed to the LMF. Then, the LMF may transfer corresponding location assistance data to the UE and transfer additional assistance data to the UE in one or more additional LTE positioning protocol (LPP) messages. The location assistance data delivered from the LMF to the UE may be transmitted in a unicast manner. In some cases, the LMF may transfer the location assistance data and/or the additional assistance data to the UE without receiving a request for the assistance data from the UE.

As another example, in step 3b, a location information transfer procedure may be performed. Specifically, the LMF may send a request for the location (related) information associated with the UE to the UE and indicate the type of necessary location information and associated QoS. In response to the request, the UE may transfer the location related information to the LMF. Additionally, the UE may transfer additional location related information to the LMF in one or more LPP messages. Here, the "location related information" may mean all values used for location calculation such as actual location estimate information and radio measurement or location measurement. Typically, the location related information may be a reference signal time difference (RSTD) value measured by the UE based on DL RSs transmitted to the UE by a plurality of NG-RANs and/or E-UTRANs. Similarly to the above description, the UE may transfer the location related information to the LMF without receiving a request from the LMF.

The procedures implemented in step 3b may be performed independently but may be performed consecutively. Generally, although step 3b is performed in order of the capability information transfer procedure, the location assistance data transfer procedure, and the location information transfer procedure, step 3b is not limited to such order. In other words, step 3b is not required to occur in specific order in order to improve flexibility in positioning. For example, the UE may request the location assistance data at any time in order to perform a previous request for location measurement made by the LMF. The LMF may also request location information, such as a location measurement value or a location estimate value, at any time, in the case in which location information transmitted by the UE does not satisfy required QoS. Similarly, when the UE does not perform measurement for location estimation, the UE may transmit the capability information to the LMF at any time.

In step 3b, when information or requests exchanged between the LMF and the UE are erroneous, an error message may be transmitted and received and an abort message for aborting positioning may be transmitted and received.

Protocol used in step 3b may be an LPP protocol which will be described later.

Step 3b may be performed additionally after step 3a but may be performed instead of step 3 a.

In step 4, the LMF may provide a location service response to the AMF. The location service response may include information as to whether UE positioning is successful and include a location estimate value of the UE. If the procedure of FIG. 8 has been initiated by step 1a, the AMF may transfer the location service response to a 5GC entity such as a GMLC. If the procedure of FIG. 8 has been initiated by step 1b, the AMF may use the location service response in order to provide a location service related to an emergency call.

**2.5. Positioning Protocol**

<u>LTE Positioning Protocol (LPP)</u>

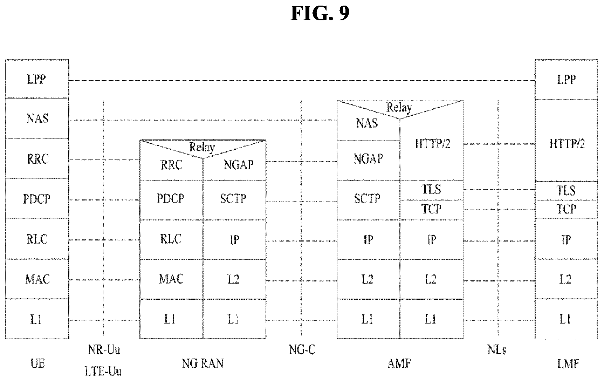

FIG. 9 illustrates an exemplary protocol layer used to support LPP message transfer between an LMF and a UE. An LPP protocol data unit (PDU) may be carried in a NAS PDU between an AMF and the UE.

Referring to FIG. 9, LPP is terminated between a target device (e.g., a UE in a control plane or an SUPL enabled terminal (SET) in a user plane) and a location server (e.g., an LMF in the control plane or an SLP in the user plane). LPP messages may be carried as transparent PDUs cross intermediate network interfaces using appropriate protocols, such an NGAP over an NG-C interface and NAS/RRC over LTE-Uu and NR-Uu interfaces. LPP is intended to enable positioning for NR and LTE using various positioning methods.

For example, a target device and a location server may exchange, through LPP, capability information therebetween, assistance data for positioning, and/or location information. The target device and the location server may exchange error information and/or indicate abort of an LPP procedure, through an LPP message.

<u>NR Positioning Protocol A (NRPPa)</u>

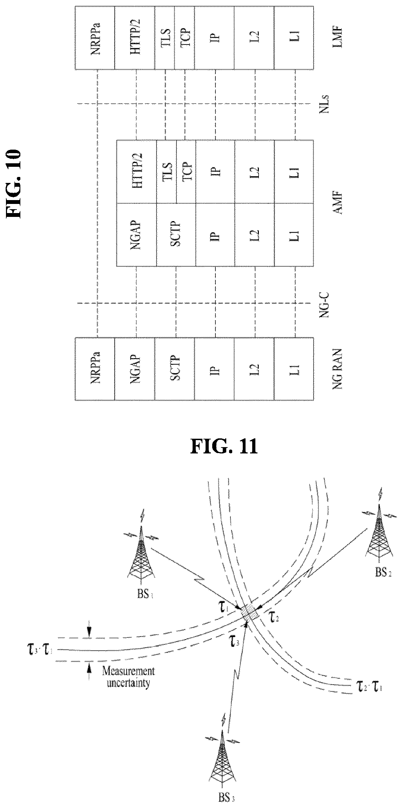

FIG. 10 illustrates an exemplary protocol layer used to support NRPPa PDU transfer between an LMF and an NG-RAN node.

NRPPa may be used to carry information between an NG-RAN node and an LMF. Specifically, NRPPa may carry an E-CID for measurement transferred from an ng-eNB to an LMF, data for support of an OTDOA positioning method, and a cell-ID and a cell position ID for support of an NR cell ID positioning method. An AMF may route NRPPa PDUs based on a routing ID of an involved LMF over an NG-C interface without information about related NRPPa transaction.

An NRPPa procedure for location and data collection may be divided into two types. The first type is a UE associated procedure for transfer of information about a particular UE (e.g., location measurement information) and the second type is a non-UE-associated procedure for transfer of information applicable to an NG-RAN node and associated TPs (e.g., gNB/ng-eNB/TP timing information). The two types may be supported independently or may be supported simultaneously.

**2.6. Positioning Measurement Method**

Positioning methods supported in the NG-RAN may include a GNSS, an OTDOA, an E-CID, barometric sensor positioning, WLAN positioning, Bluetooth positioning, a TBS, uplink time difference of arrival (UTDOA) etc. Although any one of the positioning methods may be used for UE positioning, two or more positioning methods may be used for UE positioning.

<u>OTDOA (Observed Time Difference Of Arrival)</u>

FIG. 11 is a diagram illustrating an observed time difference of arrival (OTDOA) positioning method, to which various embodiments are applicable;

The OTDOA positioning method uses time measured for DL signals received from multiple TPs including an eNB, an ng-eNB, and a PRS-only TP by the UE. The UE measures time of received DL signals using location assistance data received from a location server. The position of the UE may be determined based on such a measurement result and geographical coordinates of neighboring TPs.

The UE connected to the gNB may request measurement gaps to perform OTDOA measurement from a TP. If the UE is not aware of an SFN of at least one TP in OTDOA assistance data, the UE may use autonomous gaps to obtain an SFN of an OTDOA reference cell prior to requesting measurement gaps for performing reference signal time difference (RSTD) measurement.

Here, the RSTD may be defined as the smallest relative time difference between two subframe boundaries received from a reference cell and a measurement cell. That is, the RSTD may be calculated as the relative time difference between the start time of a subframe received from the measurement cell and the start time of a subframe from the reference cell that is closest to the subframe received from the measurement cell. The reference cell may be selected by the UE.

For accurate OTDOA measurement, it is necessary to measure time of arrival (ToA) of signals received from geographically distributed three or more TPs or BSs. For example, ToA for each of TP 1, TP 2, and TP 3 may be measured, and RSTD for TP 1 and TP 2, RSTD for TP 2 and TP 3, and RSTD for TP 3 and TP 1 are calculated based on three ToA values. A geometric hyperbola is determined based on the calculated RSTD values and a point at which curves of the hyperbola cross may be estimated as the position of the UE. In this case, accuracy and/or uncertainty for each ToA measurement may occur and the estimated position of the UE may be known as a specific range according to measurement uncertainty.

For example, RSTD for two TPs may be calculated based on Equation 5 below.

[Equation 5]

$$RSTD_{i,1} = \frac{\sqrt{(x_t - x_i)^2 + (y_t - y_i)^2}}{c} - \frac{\sqrt{(x_t - x_1)^2 + (y_t - y_1)^2}}{c} + (T_i - T_1) + (n_i - n_1)$$

In Equation 5, $\{x_t, y_t\}$ are (unknown) coordinates of a target UE, $\{x_i, y_i\}$ are (known) coordinates of a TP, and $\{x_1, y_1\}$ are coordinates of a reference TP (or another TP). Here, $(T_i - T_i)$ is a transmission time offset between two TPs, referred to as "real time differences" (RTDs), and $n_i$ and $n_1$ are UE ToA measurement error values.

E-CID (Enhanced Cell ID)

In a cell ID (CID) positioning method, the position of the UE may be measured based on geographical information of a serving ng-eNB, a serving gNB, and/or a serving cell of the UE. For example, the geographical information of the serving ng-eNB, the serving gNB, and/or the serving cell may be acquired by paging, registration, etc.

The E-CID positioning method may use additional UE measurement and/or NG-RAN radio resources in order to improve UE location estimation in addition to the CID positioning method. Although the E-CID positioning method partially may utilize the same measurement methods as a measurement control system on an RRC protocol, additional measurement only for UE location measurement is not generally performed. In other words, an additional measurement configuration or measurement control message may not be provided for UE location measurement. The UE does not expect that an additional measurement operation only for location measurement will be requested and the UE may report a measurement value obtained by generally measurable methods.

For example, the serving gNB may implement the E-CID positioning method using an E-UTRA measurement value provided by the UE.

Measurement elements usable for E-CID positioning may be, for example, as follows.

- UE measurement: E-UTRA reference signal received power (RSRP), E-UTRA reference signal received quality (RSRQ), UE E-UTRA reception (Rx)-transmission (Tx) time difference, GERAN/WLAN reference signal strength indication (RSSI), UTRAN common pilot channel (CPICH) received signal code power (RSCP), and/or UTRAN CPICH Ec/Io
- E-UTRAN measurement: ng-eNB Rx-Tx time difference, timing advance (TADV), and/or AoA

Here, TADV may be divided into Type 1 and Type 2 as follows.

$$T_{ADV} \text{ Type 1} = (\text{ng-eNB Rx-Tx time difference}) + (\text{UE E-UTRA Rx-Tx time difference})$$

$$TADV \text{ Type 2} = \text{ng-eNB Rx-Tx time difference}$$

AoA may be used to measure the direction of the UE. AoA is defined as the estimated angle of the UE counterclockwise from the eNB/TP. In this case, a geographical reference direction may be north. The eNB/TP may use a UL signal such as an SRS and/or a DMRS for AoA measurement. The accuracy of measurement of AoA increases as the arrangement of an antenna array increases. When antenna arrays are arranged at the same interval, signals received at adjacent antenna elements may have constant phase rotate.

Multi RTT (Multi-cell RTT)

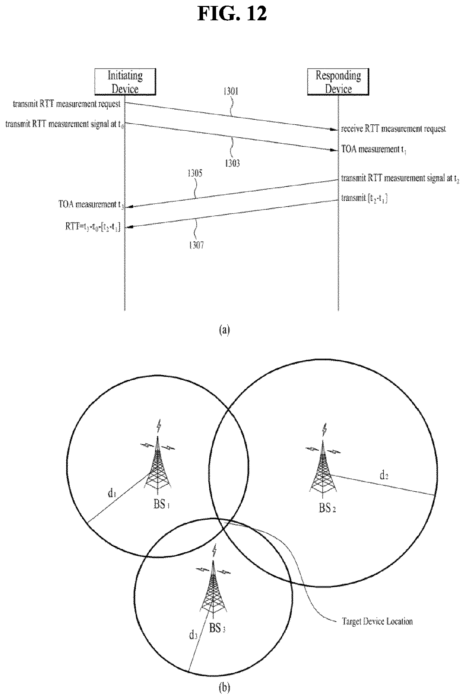

FIG. 12 is a diagram illustrating an exemplary multi-round trip time (multi-RTT) positioning method to which various embodiments are applicable.

Referring to FIG. 12(a), an exemplary RTT procedure is illustrated, in which an initiating device and a responding device perform ToA measurements, and the responding device provides ToA measurements to the initiating device, for RTT measurement (calculation). The initiating device may be a TRP and/or a UE, and the responding device may be a UE and/or a TRP.

In operation 1301 according to various embodiments, the initiating device may transmit an RTT measurement request, and the responding device may receive the RTT measurement request.

In operation 1303 according to various embodiments, the initiating device may transmit an RTT measurement signal at t0 and the responding device may acquire a ToA measurement 11.

In operation 1305 according to various embodiments, the responding device may transmit an RTT measurement signal at t2 and the initiating device may acquire a ToA measurement t3.

In operation 1307 according to various embodiments, the responding device may transmit information about [t2-t1], and the initiating device may receive the information and calculate an RTT by Equation 6. The information may be transmitted and received based on a separate signal or in the RTT measurement signal of operation 1305.

[Equation 6]

$$\mathrm{RTT} = t_3 - t_0 - [t_2 - t_1]$$

Referring to FIG. 12(b), an RTT may correspond to a double-range measurement between two devices. Positioning estimation may be performed from the corresponding information, and multilateration may be used for the positioning estimation, $d_1$, $d_2$, and $d_3$ may be determined based on the measured RTT, and the location of a target device may be determined to be the intersection of the circumferences of circles with radiuses of $d_1$, $d_2$, and $d_3$, in which $BS_1$, $BS_2$, and $BS_3$ (or TRPs) are centered, respectively.

**2.7. Sounding Procedure**

In a wireless communication system to which various embodiments are applicable, an SRS for positioning may be used.

An SRS-Config information element (IE) may be used to configure SRS transmission. (A list of) SRS resources and/or (a list of) SRS resource sets may be defined, and each resource set may be defined as a set of SRS resources.

The *SRS-Config* IE may include configuration information on an SRS (for other purposes) and configuration information on an SRS for positioning separately. For example, configuration information on an SRS resource set for the SRS (for other purposes) (e.g., *SRS-ResourceSet*) and configuration information on an SRS resource set for the SRS for positioning (e.g., *SRS-PosResourceSet*) may be included separately. In addition, configuration information on an SRS resource for the SRS (for other purposes) (e.g., *SRS ResourceSet*) and configuration information on an SRS resource for the SRS for positioning (e.g., *SRS-PosResource*) may be included separately.

An SRS resource set for positioning may include one or more SRS resources for positioning. Configuration information on the SRS resource set for positioning may include: information on an identifier (ID) that is assigned/allocated/related to the SRS resource set for positioning; and information on an ID that is assigned/allocated/related to each of the one or more SRS resources for positioning. For example, configuration information on an SRS resource for positioning may include an ID assigned/allocated/related to a UL resource. In addition, each SRS resource/SRS resource set for positioning may be identified based on each ID assigned/allocated/related thereto.

The SRS may be configured periodically/semi-persistently/aperiodically.

An aperiodic SRS may be triggered by DCI. The DCI may include an SRS request field.

Table 6 shows an exemplary SRS request field.

[Table 6]

| Value of SRS request field | Triggered aperiodic SRS resource set(s) for DCI format 0_1, 0_2, 1_1, 1_2, and 2_3 configured with higher layer parameter srs-TPC-PDCCH-*Group* set to 'typeB' | Triggered aperiodic SRS resource set(s) for DCI format 2_3 configured with higher layer parameter srs-TPC-*PDCCH-Group* set to 'typeA' |
|---|---|---|
| 00 | No aperiodic SRS resource set triggered | No aperiodic SRS resource set triggered |

(continued)

| Value of SRS request field | Triggered aperiodic SRS resource set(s) for DCI format 0_1, 0_2, 1_1, 1_2, and 2_3 configured with higher layer parameter srs-TPC-PDCCH-*Group* set to 'typeB' | Triggered aperiodic SRS resource set(s) for DCI format 2_3 configured with higher layer parameter srs-TPC-*PDCCH-Group* set to 'typeA' |
|---|---|---|
| 01 | SRS resource set(s) configured by *SRS-ResourceSet* with higher layer parameter aperiodicSRS-*Resource Trigger* set to 1 or an entry in *apeliodicSRS-ResourceTriggerList* set to 1<br><br>SRS resource set(s) configured by *SRS-PosResourceSet* with an entry in aperiodicSRS-*ResourceTriggerList* set to 1 when triggered by DCI formats 0_1, 0_2, 1_1, and 1_2 | SRS resource set(s) configured with higher layer parameter *usage* in SRS-*ResourceSet* set to '*antennaSwitching*' and *resource Type* in SRS-*ResourceSet* set to 'aperiodic' for a $1^{st}$ set of serving cells configured by higher layers |
| 10 | SRS resource set(s) configured by *SRS-ResourceSet* with higher layer parameter aperiodicSRS-*ResourceTrigger* set to 2 or an entry in *aperiodicSRS-ResourceTriggerList* set to 2<br><br>SRS resource set(s) configured by *SRS-PosResourceSet* with an entry in *aperiodicSRS-ResourceTriggerList* set to 2 when triggered by DCI formats 0_1, 0_2, 1_1, and 1_2 | SRS resource set(s) configured with higher layer parameter *usage* in SRS-*ResourceSet* set to '*antennaSwitching*' and *resource Type* in SRS-*ResourceSet* set to 'aperiodic' for a $2^{nd}$ set of serving cells configured by higher layers |
| | SRS resource set(s) configured by *SRS-ResourceSet* with higher layer parameter *aperiodicSRS-Resource Trigger set* to 3 or an entry in *aperiodicSRS-ResourceTriggerList* set to 3<br><br>SRS resource set(s) configured by *SRS-PosResourceSet* with an entry in *aperiodicSRS-ResourceTliggerList* set to 3 when triggered by DCI formats 0_1, 0_2, 1_1, and 1_2 | SRS resource set(s) configured with higher layer parameter *usage* in *SRS-ResourceSet* set to '*antennaSwitching*' and *resourceType* in SRS-*ResourceSet* set to 'aperiodic' for a $3^{rd}$ set of serving cells configured by higher layers |

In Table 6 srs-TPC-PDCCH-Group is a parameter for setting the triggering type for SRS transmission to type A or type B, aperiodicSRS-ResourceTriggerList is a parameter for configuring an additional list of DCI code points where the UE needs to transmit the SRS according to the SRS resource set configuration, aperiodicSRS-ResourceTrigger is a parameter for configuring a DCI code point where the SRS needs to be transmitted according to the SRS resource set configuration, and resourceType is a parameter for configuring (periodic/semi-static/aperiodic) time domain behavior of the SRS resource configuration.

### 3. Various Embodiments

A detailed description will be given of various embodiments based on the above technical ideas. The afore-described contents of Section 1 and Section 2 are applicable to various embodiments described below. For example, operations, functions, terminologies, and so on which are not defined in various embodiments may be performed and described based on Section 1 and Section 2.
Symbols/abbreviations/terms used in the description of various embodiments may be defined as follows.

- A/B/C: A and/or B and/or C
- AOA (AoA) : angle of arrival
- CSI-RS : channel state information reference signal

- ECID : enhanced cell identifier
- GPS : global positioning system
- GNSS : global navigation satellite system
- LMF : location management function
- MAC : medium access control
- MAC-CE : MAC-control element
- NRPPa : NR positioning protocol a
- OTDOA (OTDoA) : observed time difference of arrival
- PRS : positioning reference signal
- RAT : radio access technology
- RS : reference signal
- RTT : round trip time
- RSRP : reference signal received power
- RSRQ : reference signal received quality
- RSTD : reference signal time difference / relative signal time difference
- SINR : signal to interference plus noise ratio)
- SNR : signal to noise ratio
- SRS : sounding reference signal
- SS : synchronization signal
- SSB : synchronization signal block
- SS/PBCH : synchronization signal/physical broadcast channel
- TA : timing advance / time advance
- TDOA (TDoA) : timing difference of arrival
- TOA (ToA) : time of arrival
- TRP : transmission and reception point (TP : transmission point)
- UTDOA (UTDoA) : uplink time difference of arrival

In the description of various embodiments, a BS may be understood as a comprehensive term including a remote radio head (RRH), an eNB, a gNB, a TP, a reception point (RP), a relay, and the like.

In the description of various embodiments, the expression 'greater than/above A' may be replaced with the expression 'above/greater than A'.

In the description of various embodiments, the expression 'less than/below B' may be replaced with the expression 'below/less than B'.

For example, the UE may send a request for a measurement gap to the BS/server for location measurement. Then, the UE may receive and measure a PRS within the designated measurement gap. In addition, the UE may request UL resources to report measurement results.

For example, the BS/server may transmit a response to the UE in response to the UL resource request, and the UE may report the measured results within the resources allocated by the BS/server.

Various embodiments may be related to methods of reducing latency in terms of the physical layer.

Various embodiments may be related to methods of transmitting and receiving positioning measurement reports on preconfigured PUSCH resources.

Various embodiments may be related to methods of reducing latency in UE positioning in NR systems.

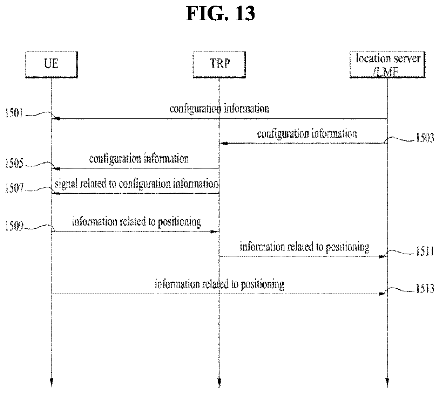

FIG. 13 is a simplified diagram illustrating an operating method of a UE, a TRP, a location server, and/or an LMF according to various embodiments.

Referring to FIG. 13, in operation 1301 according to various embodiments, the location server and/or the LMF may transmit configuration indicated to the UE and the UE may receive the configuration information.

In operation 1303 according to various embodiments, the location server and/or the LMF may transmit reference configuration information to the TRP and the TRP may receive the reference configuration information. In operation 1305 according to various embodiments, the TRP may transmit the reference configuration information to the UE and the UE may receive the reference configuration information. In this case, operation 1301 according to various embodiments may be omitted.

In contrast, operations 1303 and 1305 according to various embodiments may be omitted. In this case, operation 1301 according to various embodiments may be performed.

That is, operation 1301 according to various embodiments, and operations 1303 and 1305 according to various embodiments may be selectively performed.

In operation 1307 according to various embodiments, the TRP may transmit a signal related to the configuration information and the UE may receive the signal related to the configuration information. For example, the signal related to the configuration information may be a signal for positioning of the UE.

In operation 1309 according to various embodiments, the UE may transmit a signal related to positioning to the TRP and the TRP may receive the signal related to positioning. In operation 1311 according to various embodiments, the TRP may transmit the signal related to positioning to the location server and/or the LMF and the location server and/or the LMF may receive the signal related to positioning.

In operation 1313 according to various embodiments, the UE may transmit the signal related to positioning to the location server and/or the LMF and the location server and/or the LMF may receive the signal related to positioning. In this case, operations 1309 and 1311 according to various embodiments may be omitted.

In contrast, operation 1313 according to various embodiments may be omitted. In this case, operations 1309 and 1311 according to various embodiments may be performed.

That is, operations 1309 and 1311 according to various embodiments, and operation 1313 according to various embodiments may be selectively performed.

According to various embodiments, the signal related to positioning may be obtained based on the configuration information and/or the signal related to the configuration information.

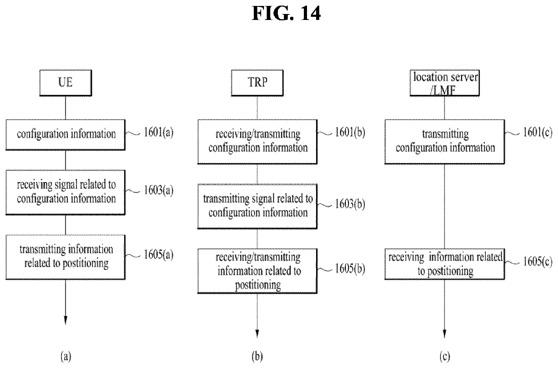

FIG. 14 is a simplified diagram illustrating an operating method of a UE, a TRP, a location server, and/or an LMF according to various embodiments.

Referring to FIG. 14(a), in operation 1401(a) according to various embodiments, the UE may receive configuration information.

In operation 1403(a) according to various embodiments, the UE may receive a signal related to the configuration information.

In operation 1405(a) according to various embodiments, the UE may transmit information related to positioning.

Referring to FIG. 14(b), in operation 1401(b) according to various embodiments, the TRP may receive configuration information from the location server and/or the LMF and transmit the configuration information to the UE.

In operation 1403(b) according to various embodiments, the TRP may transmit a signal related to the configuration information.

In operation 1405(b) according to various embodiments, the TRP may receive information related to positioning and transmit the information related to positioning to the location server and/or the LMF.

Referring to FIG. 14(c), in operation 1401(c) according to various embodiments, the location server and/or the LMF may transmit configuration information.

In operation 1405(c) according to various embodiments, the location server and/or the LMF may receive information related to positioning.

For example, the above-described configuration information may be understood as relating to reference configuration (information) or one or more pieces of information that the location server, the LMF, and/or the TRP transmits to/configures for the UE and/or may be understood as the reference configuration (information) or one or more pieces of information that the location server, the LMF, and/or the TRP transmits to/configures for the UE, in a description of various embodiments below.

For example, the above signal related to positioning may be understood as a signal related to one or more pieces of information that the UE reports and/or a signal including one or more pieces of information that the UE reports, in a description of various embodiments below.

For example, in a description of various embodiments below, the BS, the gNB, and the cell may be replaced with the TRP, the TP, or any device serving equally as the TRP or the TP.

For example, in a description of various embodiments below, the location server may be replaced with the LMF and any device serving equally as the LMF.

More detailed operations, functions, terms, etc. in operation methods according to various embodiments may be performed and described based on various embodiments described later. The operation methods according to various embodiments is exemplary and one or more operations in the above-described operation methods may be omitted according to detailed content of each embodiment.

Hereinafter, various embodiments will be described in detail. It may be understood by those of ordinary skill in the art that various embodiments described below may be combined in whole or in part to implement other embodiments unless mutually exclusive.

According to the typical positioning procedure in terms of physical channels, the UE sends a request for a measurement gap to receive a PRS. Then, the BS/server provides information on the corresponding measurement gap, and the UE transmits the PRS within the gap.

The UE receives the PRS in the designated duration and transmits an SR for a UL channel to the BS/server to report measurement results. The BS/server transmits scheduling information on the corresponding resource to the UE over a PDCCH, and the UE reports the measurement results on the designated resource.

However, from Release 17 (Rel. 17), the latency requirements have become shorter than before, which may require additional mechanisms to meet the requirements. Generally, the time required for the UE to perform DL positioning measurement is at least a multiple of the minimum common multiple of the periodicity of a DL PRS resource and the periodicity of a measurement gap. For example, the range of values may be {20, 40, 80, 160, 320, 640, 1280, 2560, 5120, 10240} ms, which is greater than the target physical layer latency (10ms) aimed in Rel. 17.

According to various embodiments, methods of reducing latency in UE positioning in terms of the physical layer may be provided.

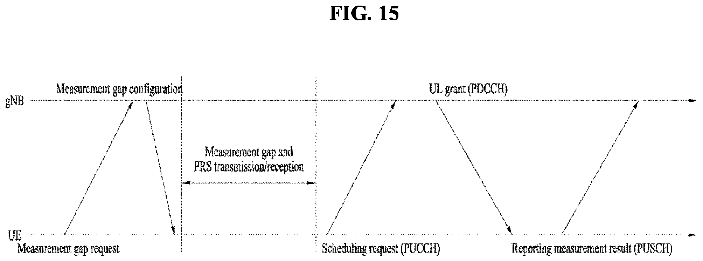

FIG. 15 is a diagram illustrating an exemplary positioning procedure in terms of physical layers applicable to various embodiments.

Referring to FIG. 15, in the case of grant-based DL positioning measurement, the UE may transmit a request for a measurement gap to the BS for PRS measurement. The BS may provide information on a measurement gap configuration. The UE may receive configured PRS resources and/or sets within the designated gap. The UE may perform the PRS measurement in the corresponding duration and request resource allocation to report the results. In other words, the UE may send a request (e.g., SR) for resources for UL data to transmit, and the BS may allocate UL resources in response to the request to enable the UE to report the measurement result. The UE may provide the measurement results on the allocated resources.

According to various embodiments, methods of reducing not only latency related to a measurement gap but latency in measurement of PRS resources may be provided.

According to various embodiments, methods of reducing time delay in terms of measurement reporting may be provided.

For example, the UE may receive resource information on PRS resources and/or sets to be measured through assistance data. Additionally, the UE may also receive information on a measurement gap in which the UE will perform measurement.

Typically, measuring PRS sources that exist within a measurement gap may be considered the fundamental operation of the UE. However, even if there is no configuration for the measurement gap, the UE may use designated PRS resources for positioning measurement.

For example, the LMF may provide a configuration related to PRS resources via system information and/or RRC signaling. Information on a measurement gap in which the UE is capable of measuring a PRS may be transmitted from the BS to the UE via relevant information (e.g., *MeasGapConfig*). When a request for positioning is provided by the server to the UE, the UE may receive a PRS in an adjacent measurement gap. However, the UE may not know at which point in time the BS expects the UE to perform measurement and at which point the BS desires the UE to report measurement results. Therefore, the UE may use an SR (PUCCH) to request resources to transmit information to the BS

According to various embodiments, the UE may report measurement results without a separate SR, thereby providing the measurement results to the LMF faster in terms of latency. Hereinafter, methods by which the UE provides measurement results to the LMF faster in terms of latency by reporting the measurement results will be described.

The BS and/or server may preconfigure to the UE resources for a PUSCH to be used for measurement reporting.

The details regarding configured grants used in and applied to Ultra-Reliable and Low Latency Communications (URLLC) may be found in Table 7.

[Table 7]

| **6.1.2.3 Resource allocation for uplink transmission with configured grant** |
|---|
| When PUSCH resource allocation is semi-statically configured by higher layer parameter *configuredGrantConfig* in *BWP-UplinkDedicated* information element, and the PUSCH transmission corresponding to a configured grant, the following higher layer parameters are applied in the transmission: <br><br>    - For Type 1 PUSCH transmissions with a configured grant, the following parameters are given in *configuredGrantConfig* unless mentioned otherwise: <br><br>       - For the determination of the PUSCH repetition type, if the higher layer parameter *pusch-RepTypeIndicator* in *rrc-ConfiguredUplinkGrant* is configured and set to 'pusch-RepTypeB', PUSCH repetition type B is applied; otherwise, PUSCH repetition type A is applied; <br><br>       - For PUSCH repetition type A, the selection of the time domain resource allocation table follows the rules for DCI format 0_0 on UE specific search space, as defined in Clause 6.1.2.1.1. <br><br>       - For PUSCH repetition type B, the selection of the time domain resource allocation table is as follows: <br><br>          - If *pusch-RepTypeIndicatorDCI-0-1* in *pusch-Config* is configured and set to 'pusch-RepTypcB; pusch-TimeDomainResourceAllocationListDCI-0-1* in *pusch-Config* is used; |

(continued)

<table>
<tr><td>

**6.1.2.3 Resource allocation for uplink transmission with configured grant**

- Otherwise, *pusch-TimeDomainResourceAllocationListDCI-0-2* in *pusch-Config* is used.

- It is not expected that *pusch-RepTypeIndicator* in *rrc-ConfiguredUplinkGrant* is configured with 'pusch-RepTypeB' when none of *pusch-RepTypeIndicatorDCI-0-1* and *pusch-RepTypeIndicatorDCI-0-2* in *pusch-Config* is set to 'pusch-RepTypeB'.

- The higher layer parameter *timeDomainAllocation* value m provides a row index $m+1$ pointing to the determined time domain resource allocation table, where the start symbol and length are determined following the procedure defined in Clause 6.1.2.1;

- Frequency domain resource allocation is determined by the $N$ LSB bits in the higher layer parameter *fiequencyDomainAllocation*, forming a bit sequence $f_{17}, ... , f_1, f_0$, where $f_0$ is the LSB, according to the procedure in Clause 6.1.2.2 and N is determined as the size of frequency domain resource assignment field in DCI format 0_1 for a given resource allocation type indicated by *resourceAllocation,* except if *useInterlacePUCCH-PUSCH* in *BWP-UplinkDedicated* is configured, in which case uplink type 2 resource allocation is used wherein the UE interprets the LSB bits in the higher layer parameter frequencyDomainAllocation as for the frequency domain resource assignment field of DCI 0_1 according to the procedure in Clause 6.1.2.2.3;

- The $I_{MCS}$ is provided by higher layer parameter *mcsAndTBS*;

- Number ofDM-RS CDM groups, DM-RS ports, SRS resource indication and DM-RS sequence initialization are determined as in Clause 7.3.1.1.2 of [5, TS 38.212], and the antenna port value, the bit value for DM-RS sequence initialization, preceding information and number of layers, SRS resource indicator are provided by *antennaPort, dmrs-SeqInitialization, precodingAndNumberOfLayers*, and *srs-ResourceIndicator* respectively;

- When frequency hopping is enabled, the frequency offset between two frequency hops can be configured by higher layer parameter *frequencyHoppingOffset*.

- For Type 2 PUSCH transmissions with a configured grant: the resource allocation follows the higher layer configuration according to [10, TS 38.321], and UL grant received on the DCI.

- The PUSCH repetition type and the time domain resource allocation table are determined by the PUSCH repetition type and the time domain resource al location table associated with the UL grant received on the DCI, respectively, as defined in Clause 6.1.1.1.

</td></tr>
</table>

For PUSCH transmissions with a Type 1 or Type 2 configured grant, the number of (nominal) repetitions K to be applied to the transmitted transport block is provided by the indexed row in the time domain resource allocation table if *numberOfRepetitions* is present in the table; otherwise K is provided by the higher layer configured parameters *repK*. The UE shall not transmit anything on the resources configured by *configuredGrantConfig* if the higher layers did not deliver a transport block to transmit on the resources allocated for uplink transmission without grant.

A set of allowed periodicities P are defined in [12, TS 38.331]. The higher layer parameter *cg-n rofSlots*, provides the number of consecutive slots allocated within a configured grant peri od. The higher layer parameter *cg-nrofPUSCH-InSlot* provides the number of consecutive PUSCH allocations within a slot, where the first PUSCH allocation follows the higher layer parameter *timeDomainAllocation* for Type 1 PUSCH transmission or the higher layer configuration according to [10, TS 38.321], and UL grant received on the DCI for Type 2 PUSCH transmissions, and the remaining PUSCH allocations have the same lengt h and PUSCH mapping type, and are appended following the previous allocations without any gaps. The same combination of start symbol and length and PUSCH mapping type r epeats over the consecutively allocated slots.

(continued)

For operation with shared spectrum channel access where a UE is performing uplink transmission with configured grants in contiguous OFDM symbols on all resource blocks of an RB set, for the first such UL transmission the UE determines a duration of a cyclic prefix extension $T_{ext}$ to be applied for transmission according to [4, TS 38.211] where the index for $\Delta_i$ [4, TS 38.211] is chosen randomly from a set of values configured by higher layers according to the following rule:

- If the first such UL transmission is within a channel occupancy initiated by the gNB (defined in Clause 4 of [16, TS 37.213]), the set of values is determined by *cg-StartingFullBW-InsideCOT*;
- otherwise, the set of values is determined by *cg-StartingFullBW-OutsideCOT*.

For operation with shared spectrum channel access where a UE is performing uplink transmission with configured grants in contiguous OFDM symbols on fewer than all resource blocks of an RB set, for the first such UL transmission the UE determines a duration of a cyclic prefix extension $T_{ext}$ to be applied for transmission according to [4, TS 38.211] according to the following rule:

- If the first such UL transmission is within a channel occupancy initiated by the gNB (defined in Clause 4 of [16, TS 37.213]), the index for $\Delta_i$ [4, TS 38.211] is equal to *cg-StartingPartialBW-InsideCOT*;
- otherwise, the index for $\Delta_i$ [4, TS 38.211] is equal to *cg-StartingPartialBW-OutsideCOT.*

6.1.2.3.1          Transport Block repetition for uplink transmissions of PUSCH repetition Type A with a configured grant

The procedures described in this clause apply to PUSCH transmissions of PUSCH repetition Type A with a Type 1 or Type 2 configured grant.

The higher layer parameter *repK-RV* defines the redundancy version pattern to be applied to the repetitions. If *cg-RetransmissionTimer* is provided, the redundancy version for uplink transmission with a configured grant is determined by the UE. If the parameter *repK-RV* is not provided in the *configuredGrantConfig* and *cg-RetransmissionTimer* is not provided, the redundancy version for

---

uplink transmissions with a configured grant shall be set to 0. If the parameter *repK-RV* is provided in the *configuredGrantConfig* and *cg-RetransmissionTimer* is not provided, for the nth transmission occasion among K repetitions, n=1, 2, ..., *K*, it is associated with $(mod(n-1,4)+1)^{th}$ value in the configured RV sequence. If a configured grant configuration is configured with *startingFromRV0* set to 'off', the initial transmission of a transport block may only start at the first transmission occasion of the K repetitions. Otherwise, the initial transmission of a transport block start at

may - the first transmission occasion of the K repetitions if the configured RV sequence is {0,2,3,1},
- any of the transmission occasions of the K repetitions that are associated with RV=0 if the configured RV sequence is {0,3,0,3},
- any of the transmission occasions of the K repetitions if the configured RV sequence is {0,0,0,0}, except the last transmission occasion when $K \geq 8$.

For any RV sequence, the repetitions shall be terminated after transmitting K repetitions, or at the last transmission occasion among the K repetitions within the period P, or from the starting symbol of the repetition that overlaps with a PUSCH with the same HARQ process scheduled by DCI format 0_0, 0_1 or 0_2, whichever is reached first. In addition, the UE shall terminate the repetition of a transport block in a PUSCH transmission if the UE receives a DCI format 0_1 with DFI flag provided and set to '1', and if in this DCI the UE detects ACK for the HARQ process corresponding to that transport block.

The UE is not expected to be configured with the time duration for the transmission of K repetitions larger than the time duration derived by the periodicity P. If the UE determines that, for a transmission occasion, the number of symbols available for the PUSCH transmission in a slot is smaller than transmission duration L, the UE does not transmit the PUSCH in the transmission occasion.

(continued)

For both Type 1 and Type 2 PUSCH transmissions with a configured grant, when K > 1, the UE shall repeat the TB across the K consecutive slots applying the same symbol allocation in each slot, except if the UE is provided with higher layer parameters *cg-nrofSlots* and *cg-nrofPUSCH-InSlot,* in which case the UE repeats the TB in the repKearliest consecutive transmission occasion candidates within the same configuration. A Type 1 or Type 2 PUSCH transmission with a configured grant in a slot is omitted according to the conditions in Clause 9, Clause 11.1 and Clause 11.2A of [6, T838.2131.

6.1.2.3.2      Transport Block repetition for uplink transmissions of PUSCH repetition Type B with a configured grant

The procedures described in this Clause apply to PUSCH transmissions of PUSCH repetition ty pe B with a Type 1 or Type 2 configured grant. For PUSCH transmissions with a Type 1 or Type 2 configured grant, the nominal repetitions and the actual repetitions are determined according to the procedures for PUSCH repetition Type B defined in Clause 6.1.2.1. The higher layer configured parameters *repK-RV* defines the redundancy version pattern to be applied to the repetitions. If the parameter *repK-RV* is not provided in the *configuredGrantConfig,* the redundancy version for each actual repetition with a configured grant shall be set to 0. Otherwise, for the nth transmission occasion among all the actual repetitions (including the actual repetitions that are omitted) of the K nominal repetitions, it

---

is associated with $(mod(n-1,4)+1)^{th}$ value in the configured RV sequence. If a configured grant configuration is configured with *startingFromRV0* set to 'off', the initial transmission of a transport block may only start at the first transmission occasion of the actual repetitions. Otherwise, the initial transmission of a transport block may start at

     - the first transmission occasion of the actual repetitions if the configured RV sequence is {0,2,3,1},

     - any of the transmission occasions of the actual repetitions that are associated with RV=0 if the configured RV sequence is {0,3,0,3},

     - any of the transmission occasions of the actual repetitions if the configured RV sequence is {0,0,0,0}, except the actual repetitions within the last nominal repetition when $K \geq 8$.

For any RV sequence, the repetitions shall be terminated after transmitting K nominal repetitions, or at the last transmission occasion among the K nominal repetitions within the period P, or from the starting symbol of a repetition that overlaps with a PUSCH with the same HARQ process scheduled by DCI format 0_0, 0_1 or 0_2, whichever is reached first. The UE is not expected to be configured with the time duration for the transmission of K nominal repetitions larger than the time duration derived by the periodicity P.

[in 38.321]

5.8.2      Uplink

There are two types of transmission without dynamic grant:

     - configured grant Type 1 where an uplink grant is provided by RRC, and stored as configured uplink grant;

     - configured grant Type 2 where an uplink grant is provided by PDCCH, and stored or cleared as configured uplink grant based on L1 signalling indicating configured uplink grant activation or deactivation.

Type 1 and Type 2 are configured by RRC per Serving Cell and per BWP. Multiple configurations can be active simultaneously in the same BWP. For Type 2, activation and deactivation are independent among the Serving Cells. For the same BWP, the MAC entity can be configured with both Type 1 and Type 2.

RRC configures the following parameters when the configured grant Type 1 is configured:

     - *cs-RNTI*: CS-RNTI for retransmission;

     - *periodicity*: periodicity of the configured grant Type 1;

     - *timeDomainOffset*. Offset of a resource with respect to SFN = timeReferenceSFN in time domain;

     - *timeDomainAllocation*: Allocation of configured uplink grant in time domain which contains *startSymbolAndLength* (i.e. *SLIV* in TS 38.214 [7]) or startSymbol (i.e. *S* in TS 38.214 [7]);

     - *nrofHARQ-Processes*: the number of HARQ processes for configured grant;

(continued)

| |
|---|
| - *harq-ProcID-Offset*: offset of HARQ process for configured grant for operation with shared spectrum channel access;<br>- *harq-ProcID-Offset2*: offset of HARQ process for configured grant;<br>- *timeReferenceSFN*: SFN used for determination of the offset of a resource in time domain. The UE uses the closest SFN with the indicated number preceding the reception of the configured grant configuration. |

| |
|---|
| RRC configures the following parameters when the configured grant Type 2 is configured:<br>    - *cs-RNTI*: CS-RNTI for activation, deactivation, and retransmission;<br>    - *periodicity*: periodicity of the configured grant Type 2;<br>    - *nrofHARQ-Processes*: the number of HARQ processes for configured grant;<br>    - *harq-ProcID-Offset*: offset of HARQ process for configured grant for operation with shared spectrum channel access;<br>    - *harq-ProcID-Offse2*: offset of HARQ process for configured grant.<br>RRC configures the following parameters when retransmissions on configured uplink grant is configured:<br>    - *cg-RetransmissionTimer*: the duration after a configured grant (re) transmission of a HARQ process when the UE shall not autonomously retransmit that HARQ process.<br>Upon configuration of a configured grant Type 1 for a Serving Cell by upper layers, the MAC entity shall:<br>    1> store the uplink grant provided by upper layers as a configured uplink grant for the indicated Serving Cell:<br>    1> initialise or re-initialise the configured uplink grant to start in the symbol according to *timeDomainOffset*, *timeReferenceSFN*, and S (derived from *SLIV* or provided by *startSymbol* as specified in TS 38.214 [7]), and to reoccur with *periodicity*.<br>After an uplink grant is configured for a configured grant Type 1, the MAC entity shall consider sequentially that the $N^{th}$ (N >= 0) uplink grant occurs in the symbol for which:<br><br>$$[(\text{SFN} \times numberOfSlotsPerFrame \times numberOfSymbolsPerSlot) + (\text{slot number in the frame} \times numberOfSymbolsPerSlot) + \text{symbol number in the slot}]$$ $$= (timeReferenceSFN \times numberOfSlotsPerFrame \times numberOfSymbolsPerSlot + timeDomainOffset \times numberOfSymbolsPerSlot + S + N \times periodicity) \text{ modulo } (1024 \times numberOfSlotsPerFrame \times numberOfSymbolsPerSlot).$$<br><br>After an uplink grant is configured for a configured grant Type 2, the MAC entity shall consider sequentially that the $N^{th}$ (N >= 0) uplink grant occurs in the symbol for which:<br><br>$$[(\text{SFN} \times numberOfSlotsPerFrame \times numberOfSymbolsPerSlot) + (\text{slot number in the frame} \times numberOfSymbolsPerSlot) + \text{symbol number in the slot}]$$ $$= [(\text{SFN}_{start\ time} \times numberOfSlotsPerFrame \times numberOfSymbolsPerSlot + \text{slot}_{start\ time} \times numberOfSymbolsPerSlot + \text{symbol}_{start\ time}) + N \times periodicity]$$ $$\text{modulo } (1024 \times numberOfSlotsPerFrame \times numberOfSymbolsPerSlot).$$<br><br>where $\text{SFN}_{start\ time}$, $\text{slot}_{start\ time}$, and $\text{symbol}_{start\ time}$ are the SFN, slot, and symbol, respectively, of the first transmission opportunity of PUSCH where the configured uplink grant was (re-)initialised. If *cg-nrofPUSCH-InSlot* or *cg-nrofSlots* is configured for a configured grant Type 1 or Type 2, the MAC entity shall consider the uplink grants occur in those additional PUSCH allocations as specified in clause 6.1.2.3 of TS 38.214 [7].<br>    NOTE: In case of unaligned SFN across carriers in a cell group, the SFN of the concerned Serving Cell is used to calculate the occurrences of configured uplink grants.<br>When the configured uplink grant is released by upper layers, all the corresponding configurations shall be released and all corresponding uplink grants shall be cleared. |

> The MAC entity shall:
>> 1> if at least one configured uplink grant confirmation has been triggered and not cancelled; and
>> 1> if the MAC entity has UL resources allocated for new transmission:
>>> 2>if, in this MAC entity, at least one configured uplink grant is configured by *configuredGrantConfigToAddModList*:
>>>> 3> instruct the Multiplexing and Assembly procedure to generate a Multiple Entry Configured Grant Confirmation MAC CE as defined in clause 6.1.3.31.
>>> 2>else:
>>>> 3> instruct the Multiplexing and Assembly procedure to generate a Configured Grant Confirmation MAC CE as defined in clause 6.1.3.7.
>>> 2> cancel the triggered configured uplink grant confirmation.
>
> For a configured grant Type 2, the MAC entity shall clear the configured uplink grant(s) immediately after first transmission of Configured Grant Confirmation MAC CE or Multiple Entry Configured Grant Confirmation MAC CE which confirms the configured uplink grant deactivation. Retransmissions use:
>> - repetition of configured uplink grants; or
>> - received uplink grants addressed to CS-RNTI; or
>> - configured uplink grants with *cg-RetransmisionTimer* configured.

The resources of the corresponding PUSCH (PUSCH to be used for measurement reporting) may have a periodicity.

Similarly to configured grants, multiple PUSCH resources may be configured based on a single configuration, different services, information in a positioning report such as positioning methods, and/or multiple configurations. The corresponding configuration may be indicated by sharing the resources of a configured grant applicable for URLLC. Alternatively, the configuration may be indicated by a separate configuration for positioning measurement. In the case of such shared resources, the UE may use DCI for designated resources, similarly to configured grant type 2 used for URLLC, and/or activate and/or deactivate preconfigured resources using other DL signals.

To reduce latency in feedback, the UE may also apply the same mechanism for repeated transmission of the same data (within the configured grant). In addition, the configuration may be determined differently for each BWP and/or be determined commonly for each BWP. The configuration may be provided from the BS to the UE through RRC signaling and/or over a PDCCH (addressed with a CS-RNTI).

According to various embodiments, when reporting the capability of the UE, the UE may indicate whether the UE supports a related function based on the capability for PRS resource measurement, which does not depend on positioning methods. Additionally/alternatively, the UE may provide the corresponding information based on the capability for each positioning method

According to various embodiments, based on the above-described configuration, the UE may perform measurement reporting on preconfigured PUSCH resources according to the following various methods.

In general, a configuration for measurement gaps may be provided by the BS to the UE. The LMF indicates a configuration for PRS resources to be measured by the UE and instructs the UE to perform measurement on the configured PRS resources by transmitting an LPP message. As a result, the BS may not know at which point in time the UE actually performs the measurement. To address this issue, the UE may request resources for measurement reporting from the BS by transmitting a request for PUSCH resources (via an SR). Upon receiving the SR, the BS may recognize that the UE has completed the measurement. The measurement gap occurs periodically in units of N system frames. The measurement gap may exist within subframe units, and the duration thereof may also be indicated by the configuration.

According to various embodiments, there are provided methods by which the UE transmits positioning measurements to the BS and/or server without a separate PUCCH (e.g., SR).

According to various embodiments, there are provided methods applicable to cases where a measurement gap is configured and cases where no measurement gaps are configured.

**Method #1: The BS performs PUSCH decoding on a preconfigured adjacent PUSCH resource (and/or PUSCH occasion) after every measurement gap.**

According to various embodiments, the BS may not be aware of information on a positioning request transmitted from the LMF to the UE. In other words, since the BS does not know a measurement gap (MG) where the UE performs measurement, the BS may perform decoding of a measurement report on the most adjacent PUSCH resource, which is configured by a configured grant, after the MG, and the UE may also transmit the measurement report on the corresponding resource. In the description of various embodiments, the term "PUSCH resource" may be replaced with a PUSCH occasion (PO), and the term "PO" may be replaced with a PUSCH resource.

According to various embodiments, a measurement report may be transmitted on a PUSCH resource closest to a measurement gap without separate configurations/instructions, thereby reducing signaling overhead and/or latency.

**Method #2: The UE repeatedly transmits a measurement report after an MG, after a predetermined period of time from the end of measurement, and/or on N specific PUSCH resources (and/or POs).**

In Method #1 according to various embodiments, since the BS performs decoding on a single configured PO after an MG, there may be cases where the actual measurement report is not be delivered on the most adjacent configured PO due to the processing capability of the UE or additional delays.

According to various embodiments, the BS may provide the UE with information on repeated transmission. To this end, the BS may indicate a transmission time for T symbols, slots, and/or subframes in system messages and/or RRC signaling. Additionally/alternatively, the corresponding time may be separately configured by the BS based on values reported through UE capability reporting or predetermined to have a specific value.

According to various embodiments, the number of times that PUSCH resources are repeated configured to transmit measurements on preconfigured PUSCH resources (e.g., POs) may be indicated. For example, the UE may repeatedly transmit a measurement on PUSCH resources that exist within a configured time duration after an MG where the UE actually performs measurement or transmit a measurement report on POs corresponding to the number of repetitions. The BS may perform decoding for all existing POs within the configured/instructed time duration and/or number. For example, the repetition may be interpreted as repetition of the same data and/or transmission of different data in consideration of the size of a measurement report on the assumption that additional POs are allocated. Additionally/alternatively, a specific timing window and/or timer may be configured. Until the timing window and/or timer expire, the UE may transmit the results of measurement reports over a PUSCH on existing POs during the corresponding period.

**Method #3: A specific PUSCH resource is indicated for a preconfigured PUSCH resource (and/or PO) existing after an MG, and a measurement report is transmitted on the indicated resource.**

In Method #2 according to various embodiments, a measurement report may be configured/indicated on all contiguous PUSCH resources and/or POs.

According to various embodiments, specific PUSCH resources may be selected/indicated for better efficient use of resources, compared to Method #2, thereby improving flexibility in terms of resource utilization.

According to various embodiments, an on/off indication may be indicated in the form of a bitmap. According to various embodiments, the UE may report positioning measurements on all PUSCH resources set to 'on'. According to various embodiments, the BS may perform decoding on PUSCH resources set to 'on'.

According to various embodiments, multiple bitmaps (and/or patterns) may be configured and switched/updated by MAC-CE/DCI.

**Method #4: The UE transmits the activation of measurement reporting to the BS through lower layer signaling such as a MAC CE and/or UCI rather than an SR and then transmits a measurement report on a preconfigured PUSCH resource and/or PO.**

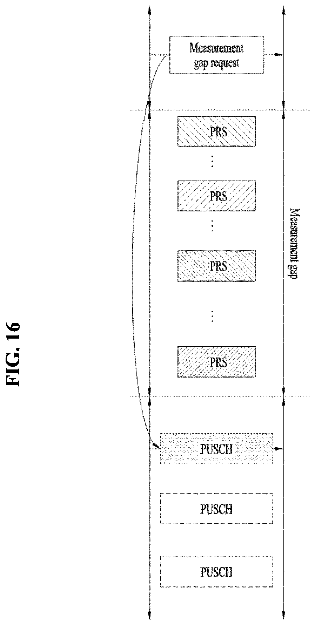

FIG. 16 is a diagram illustrating an exemplary method of activating configured grant resources for measurement reporting according to various embodiments.

Referring to FIG. 16, according to various embodiments, after performing measurement reporting through lower layer signaling rather than RRC, the UE may be instructed whether to use preconfigured PUSCH resources at the time when the measurement reporting is prepared or before the time.

According to various embodiments, the BS may perform decoding on the earliest resource after detection of the corresponding signaling and/or after the most adjacent MG. According to various embodiments, the UE may report a measurement on the corresponding resource.

According to various embodiments, the signal for activation may be transmitted both before and/or after the MG.

Method #4-1: Transmission of additional information on consecutive PUSCH resources in the context of the activation signal in Method #4

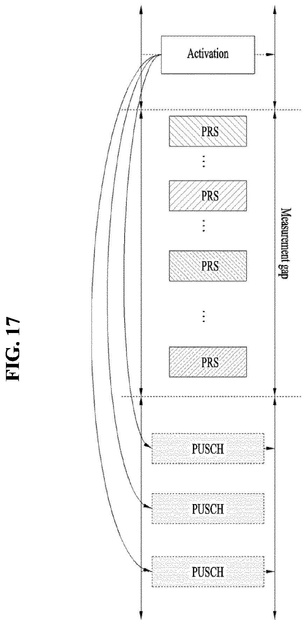

FIG. 17 is a diagram illustrating an exemplary method of activating configured grant resources for measurement reporting according to various embodiments.

In Method #4 according to various embodiments, a measurement report may be transmitted on a single PUSCH resource.

Referring to FIG. 17, according to various embodiments, after activation, a plurality of PUSCH resources may be allocated as resources for measurement reporting. The corresponding information may be transmitted in advance in system information and/or RRC signaling. Additionally/alternatively, the information may be provided in the activation (and/or activation signals).

For example, if the information is transmitted in UCI, UCI bits may be used, and/or each number may be mapped and used according to the cyclic shift of a sequence.

Additionally/alternatively, as in Method #2 according to various embodiments, information on a time rather than a number may be transmitted. In addition, the same and/or different measurement reports may be delivered on each PUSCH resource. The corresponding indication may also be selected/indicated based on Method #3 according to various embodiments.

**Method #4-2: The activation of measurement reporting is transmitted to the BS through lower layer signaling in Method #4, and information on the activation includes the configuration of measurement report resources for multiple preconfigured POs (for with no MG).**

Method #4-2 according to various embodiments may be applied when the UE expects to receive a PRS and measures the PRS even without the use of an MG in Methods #4 and #4-1.

According to various embodiments, since the UE expects to receive a PRS and measures the PRS even with no MG in this scenario, it may be difficult for the BS to predict and/or calculate resources based on the configuration of an MG unlike the scenarios described above.

In other words, upon the activation, the UE may provide information on a resource to be used for reporting among preconfigured PUSCH resources.

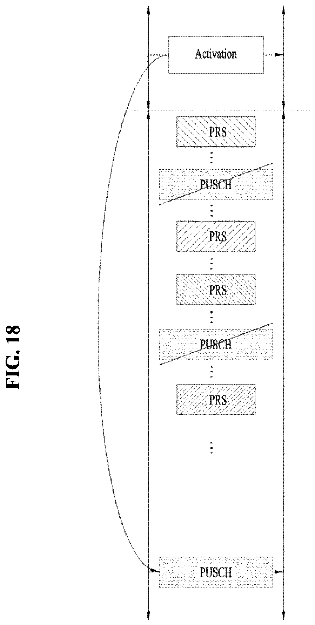

FIG. 18 is a diagram illustrating an exemplary method of activating configured grant resources for measurement reporting according to various embodiments.

According to various embodiments, referring to FIG. 18, the UE may directly inform the BS of PUSCH resources used to transmit a measurement report.

According to various embodiments, resources used for the activation may be the UCI and/or MAC-CE described above. According to various embodiments, the following methods may be used: an N-th PUSCH resource may be indicated after the activation; information indicating that N-th to M-th PUSCH resources are used to transmit a measurement report may be transmitted; and/or after transmission of time information (time offset, duration, and/or repetition), information indicating that a measurement report is transmitted on PUSCH resources after the offset information and/or during the repetition/duration may be provided to the BS and/or server

According to various embodiments, the detailed description and content for each method may be applied not only to each method but also other methods.

According to various embodiments, the above-described methods may also be applied regardless of the presence of an MG.

According to various embodiments, the information included in the activation may be transmitted in additional LPP messages.

According to various embodiments, the above-described methods may be applied regardless of the RRC state.

According to various embodiments, the activation may be extended and applied not only to a MAC-CE and/or UCI but also to other UL channels such as a PRACH. For example, the UE may be configured with configured grant based (CG-based) PUSCH resources while in the RRC connected state. Subsequently, the UE may transition to the RRC idle and/or inactive state. The UE may perform positioning measurement in the RRC idle and/or inactive state, and in this case, the UE may use the previously configured CG-based PUSCH resources. For example, positioning measurement results may be transmitted on specific resources among the CG-based PUSCH resources, and a PRACH may be used as a signal for indicating and/or activating the specific resources.

According to various embodiments, when the UE requests a PRS in an on-demand manner, the UE may also transmit the above-described parameters.

According to various embodiments, if the UE supports the corresponding functions, the UE may transmit related information when reporting the capability.

According to various embodiments, the activation may also be applied to messages used for measurement reporting and/or triggering multiple measurement configurations.

According to various embodiments, the content described above may be a separate configuration for each frequency layer and/or a common configuration for each frequency layer. Additionally, according to various embodiments, the measurement report and/or the activation of preconfigured PUSCH resources may be transmitted in other LPP messages and/or low layer signaling transmitted from another UE to the LMF and/or BS. According to various embodiments, a PUSCH resource to be reported periodically may be configured. If there is a positioning measurement due to an MG before transmission of the corresponding PUSCH resource, the positioning measurement may be transmitted. If there is no positioning measurement, transmission may be dropped.

**On-demand PR**

The details of support for the on-demand PRS may be found in Table 8.

[Table 8]

| Agreements: |
| --- |
| • The network can signal predefined PRS configurations to the UE and the UE can select one to request. FFS if the UE can request a configuration with different parameters and exactly which parameters are flexible.<br><br>• Define a new LPP assistance data IE which can contain a set of possible on-demand DL-PRS configurations, where each on-demand DL-PRS configuration has an associated identifier.<br><br>• This new LPP assistance data IE can be included in an LPP Provide Assistance Data message and/or a new posSIB.<br><br>• The procedure(s) for on-demand DL-PRS should support at least the following functionality (up to RAN3 what is in NRPPa vs. OAM, etc.):<br><br>  ✓ Providing the requested on-demand DL-PRS configuration information from an LMF to the gNB (e.g., explicit parameter or identifier of a predefined DL-PRS configuration), and confirmation of the request by the gNB<br><br>  ✓ Provision of (possible/allowed) on-demand DL-PRS configurations that the gNB can support from a gNB to an LMF<br><br>  ✓ TRP capability transfer (e.g., whether the RAN node supports the reconfiguration of DL-PRS, etc.) |

A list of parameters for the on-demand DL-PRS may be supported, and details thereof may be found in Table 9.

[Table 9]

| Agreement: |
| --- |
| • For potential signaling of one or more parameters (such signaling is not yet agreed) for both UE- and LMF- initiated on-demand DL PRS request, consider at least the following (all parameters will not necessarily be supported and all parameters may not be applicable to both UE-initiated and LMF-initiated on-demand DL PRS request)<br><br>  1. Start/end time of DL PRS transmission<br>  2. DL PRS resource bandwidth<br>  3. DL-PRS resource set IDs<br>  4. DL PRS resource IDs<br>  5. DL PRS transmission periodicity and offset<br>  6. DL PRS resource repetition factor<br>  7. Number of DL PRS symbols per DL PRS resource<br>  8. DL PRS muting patterns<br>  9. DL PRS QCL information<br>  10. Number of TRPs<br>  11. Number of PRS resources per PRS resource set<br>  12. Number frequency layers or frequency layer indicator<br>  13. Beam directions<br>  14.Combsize, start PRB, Point A of DL PRS<br>  15.ON/OFF indicator of the DL PRS |

(continued)

| FFS additional parameters indicated for UE and/or LMF initiated on-demand DL P RS request |
| --- |

Generally, parameters capable of being transmitted in the on-demand PRS may encompass all parameters related to PRS resources transmitted by assistance data.

However, the concern lies in the ambiguity associated with the currently listed ON/OFF indicators. Currently, the activation/deactivation of PRS resources is supported by a muting pattern. If the ON/OFF indicator means turning on/off a specific PRS resource, a specific resource set, and/or a specific TRP, the indicator may conflict with the muting pattern. Therefore, there is a need to clarify what function the corresponding parameters are intended to support.

Regarding the parameters for the on-demand PRS, if the discussed ON/OFF indicator means turning on/off a specific PRS resource, a specific resource set, and/or a specific TRP, the indicator may conflict with the muting pattern.

Regarding the discussed ON/OFF indicator, it is necessary to clarify what function the parameters are intended to support.

In addition, measurement reporting and/or triggering for the on-demand PRS also need to be discussed. Regarding the measurement reporting, there is a need to discuss whether to follow the legacy operations of existing measurement reporting or perform measurement reporting based on a separate design. If the reporting enhancement mechanism used for latency reduction is applied in the same manner to the on-demand PRS procedure, related parameters may also be provided by the UE to the BS when requesting the on-demand PRS.

For example, if a CG-based PUSCH is introduced into measurement reporting, information related to activation may be transmitted together when the UE requests the on-demand PRS. Regarding the triggering of the on-demand PRS, there may also be a need to discuss which physical channel is used to transmit a triggering message to the server. For example, it may be necessary to discuss whether the triggering message is provided through RRC signaling, a PUCCH, a MAC-CE, or other low layer signaling.

It may be considered to include information related to measurement reporting when the on-demand PRS is requested.

Regarding the triggering of the on-demand PRS, there is a need to discuss which physical channel is used to transmit the triggering message is delivered to the server.

For example, discussions regarding latency may be found in Table 10.

[Table 10]

| Agreement: |
| --- |
| M-sample (1<=M<4) PRS processing corresponding to measurements performed within M i nstances of the DL PRS resource set on a PRS resource, subject to UE capability, is bene ficial from a RAN1 perspective for latency reduction.<br>• One sample corresponds to one instance<br>• Send an LS to RAN4 informing that<br>  ◦ M-sample (1<=M<4) measurements corresponding to measurements performed within M (1<=M<4) instances of the DL PRS resource set on a PRS resource are beneficial for reduction of measurement latency from RAN1 point of view.<br>  ◦ RAN4 is requested to check the feasibility of measurements performed within M (1<=M<4) instances of the DL PRS resource set and identify the impact on requirements/side condition.<br>• RAN1 to further study at least the following aspects for allowing M-sample (1<=M<4) PRS processing<br>  ◦ Details of UE capability<br>  ◦ Signaling details, e.g., to indicate whether measurement is based on one or more samples<br>  ◦ Whether the PRS sample processing time is defined and the relation with (N, T).<br>    ▪ Note: This may have RAN4 dependency |

As a result of the discussions mentioned above, if the reduced samples is confirmed to be supported, the UE needs to inform the LMF whether the UE supports the corresponding functionality when reporting the capability. Generally, the UE may report the common capability, which may be applied to all positioning methods. In this case, regarding the processing capability (N, T), which depends on the buffering capability of the UE, T-N represents post-processing time. If the value of N (the duration of DL PRS symbols) changes, the corresponding post-processing time may also change. In other words, when the minimum number of samples that UE needs to measure is changed, the related capability such as a post-processing time needs to be changed and reported accordingly.

If the minimum number of samples required for the UE to perform measurement reporting decreases, it is necessary to redefine the related capability such as the post-processing time.

In addition, estimating the location based on reduced samples may potentially degrade performance in terms of accuracy compared to the previous case. Therefore, to allow the UE to distinguish and request a normal case where accuracy is guaranteed and a specific use case/scenario required in terms of latency depending on the UE capability, the LMF needs to include/transmit related information when requesting a measurement report from the UE.

For example, as shown in Table 11 or 12, when requesting location information, the LMF may request the information separately for each positioning method. Additionally/alternatively, the LMF may configure/indicate to the UE a common IE which is independent of positioning methods.

[Table 11]

```
-- ASN1START


NR-DL-TDOA-RequestLocationInformation-r16 ::= SEQUENCE {
        nr-DL-PRS-RstdMeasurementInfoRequest-r16        ENUMERATED { true }
                OPTIONAL,-- Need ON
        nr-RequestedMeasurements-r16                BIT STRING { prsrsrpReq (0) } (SIZE(1..8)),
        nr-AssistanceAvailability-r16        BOOLEAN,
        nr-DL-TDOA-ReportConfig-r16                NR-DL-TDOA-ReportConfig-r16
        OPTIONAL, -- Need ON
        additionalPaths-r16                ENUMERATED { requested }        OPTIONAL, -
- Need ON
                        reducedsample-r17                        ENUMERATED { requested } or
{SIZE(1..4)}    OPTIONAL, -- Need ON
                ...

}
```

[Table 12]

```
CommonIEsRequestLocationInformation ::= SEQUENCE {
        locationInformationType              LocationInformationType,
        triggeredReporting                   TriggeredReportingCriteria    OPTIONAL,    --
Cond ECID
        periodicalReporting                  PeriodicalReportingCriteria           OPTIONAL,
        -- Need ON
        additionalInformation                     AdditionalInformation       OPTIONAL,
        -- Need ON
        qos                      QoS                       OPTIONAL,    -- Need ON
        environment                          Environment            OPTIONAL,    --
Need ON
        locationCoordinateTypes              LocationCoordinateTypes    OPTIONAL,    --
Need ON
        velocityTypes                VelocityTypes          OPTIONAL,    -- Need ON
                        reducedsample-r17                    ENUMERATED { requested } or
{SIZE(1..4)}    OPTIONAL, -- Need ON

        ...,
        [[
                messageSizeLimitNB-r14    MessageSizeLimitNB-r14              OPTIONAL
        -- Need ON
        ]],
        [[
                segmentationInfo-r14  SegmentationInfo-r14        OPTIONAL    -- Need ON
        ]]
}
```

To allow the UE to distinguish and request a normal case where accuracy is guaranteed and a specific use case/scenario required in terms of latency depending on the UE capability, the LMF needs to include/transmit related information when requesting a measurement report from the UE.

If the LMF requests the UE to report measurement results based on reduced samples, relevant indication information needs to include requested location information. In this case, the following may be considered:

- Common IE for requested location information; and
- IE for specifying positioning method (e.g., *NR-DL-TDOA-ProvideLocationInformation, NR-DL AoD-ProvideLocationInformation, NR-Multi-RTT-ProvideLocationInformation, etc.*).

Improvement of latency associated with PRS measurements with MG

Considering PRS measurement within an MG for latency reduction, Table 13 may be supported.

[Table 13]

| Agreement: |
| --- |
| RAN1 to further study at least the following aspects for MG enhancement with rega rds to MG requesting and configuration/activation/triggering for the purpose of latenc y reduction for positioning: <br> • Preconfiguration of multiple MGs <br> • Triggering/activation of MG(s) with lower layer signalings (DCI or DL MAC CE) |

(continued)

| |
|---|
| • Request of MG(s) with lower layer signaling by the UE to the gNB |
| • Request/determination of MG(s) by LMF indication to the gNB/UE |
| Note: The combination of the above items is possible. |

For example, the request and activation/triggering of a single MG or multiple MGs through lower layer signaling such as PUCCH-based signaling and/or MAC-CE based signaling may be more efficient in terms of transmission latency because such lower layer signaling may save processing/preparation time compared to higher layer signaling. Therefore, it may be desirable to transmit the request and activation of the MG through lower layer signaling in terms of latency.

Since the BS does not know the measurement request message (LPP message), it may be difficult for the BS to predict exactly when the measurement report will occur although the BS may roughly determine candidate points from the MG configuration. For this purpose, the UE needs to transmit an SR to the BS, and the BS needs to transmit a UL grant based on the reception time. However, such operation may also require improvement in terms of latency. As an example of a method to address this issue, the CG-based PUSCH may be considered. The CG-based PUSCH may eliminate the time required for the SR and grant, resulting in a benefit in terms of latency.

In other words, the CG-based PUSCH may be considered to improve measurement reporting based on latency reduction.

Even though the CG-based PUSCH is used for measurement reporting, the BS may not know which preconfigured PUSCH resources are used to transmit the measurement report. One example to address this issue is to include all the activation functions for preconfigured PUSCH resource for the request and/or activation of the MG through low layer signaling.

For example, FIG. 16 shows an example of positioning measurement reporting based on a CG-based PUSCH when an MG is configured (with an MG). Reception of a measurement report may be expected on preconfigured PUSCH resources after the adjacent MG. When the CG-based PUSCH is supported for positioning measurement as described above, if low layer signaling (for measurement reporting and/or activation) simultaneously performs the activation for the preconfigured PUSCH resources in addition to the originally intended functionality, the issue in PUSCH decoding at the BS may be resolved.

If the CG-based PUSCH is supported for positioning measurement (with an MG), low layer signaling (for measurement reporting and/or activation) needs to be able to perform the activation function for preconfigured PUSCH resources as well.

Improvement of latency associated with PRS measurement without MG

In Rel. 16, the UE may not expect to measure a PRS if no MG is configured. However, when receiving the PRS in consideration of the MG, there may be a delay. To address this issue, PRS measurement with no MG has been discussed as shown in Table 14.

[Table 14]

| |
|---|
| Agreement: |
| • Further study the following options (with the same numerology) to support PRS measurement without MGs for latency reduction in Rel-17 |
| ◦ Option 1: The PRS is from the serving cell and UE measurement is inside the active DL BWP |
| ◦ Option 2: The PRS can be from the serving cell and non-serving cell, and UE measurement is inside the active DL BWP |
| ◦ Option 3: The PRS (from the serving cell or non-serving cell) used for UE measurement may extend outside or be completely outside the active DL BWP (including with potentially a different numerology) |
| ◦ Note: RAN1 strives not to increase the PRS measurement time compared with Rel-16 MG-based measurement |
| • The following aspects are FFS |
| ◦ PRS processing prioritization window |
| ◦ Mechanism to trigger UE DL PRS measurements and report |

(continued)

| |
|---|
| ∘ UE/gNB assumptions on processing of DL PRS and other DL physical channels / signals<br>∘ UE DL PRS processing capabilities<br>• Note: Companies are encouraged to compare the latency benefits of introducing MG-less PRS measurements over MG-based PRS measurements<br>Note: Depending on the comparison of latency benefits (and other considerations s uch as complexity) between introducing MG-less PRS measurements and MG-based PRS measurements, none/one/multiple of the above options should be adopted in Rel-17. |

Among options for PRS measurement with no MG,
There are no major issues in applying Option #1. However, since the UE only measures and reports a PRS transmitted from the serving cell, Option #1 may lead very poor performance in terms of accuracy.

Option #2 allows for PRS measurement on a non-serving cell to address the shortcomings of Option #1. However, due to the characteristics of a BWP, each cell has different BWP configurations. Accordingly, on the frequency axis, the frequency overlapped (interacted) with the active DL BWP of the serving cell with respect to the neighbor may be very small or non-existent. Thus, there may be very little or no overlap in frequencies between the DL activated BWP of the serving cell and a neighboring one in the frequency domain. Therefore, while Option #2 may offer better performance compared to Option #1, there are still limitations.

Option #3 is considered as a solution that addresses the shortcomings of both Option #1 and Option #2 on the assumption of the same numerology. However, since the UEs do not expect to measure DL PRS resources with different numerologies if no MG is currently provided, the operation of receiving a PRS with the different numerologies may cause a problem.

For PRS measurement with no MG, if the UE is allowed to measure a PRS outside the active DL BWP, it may be beneficial in terms of accuracy performance when the same numerology is assumed.

When different numerologies are used, there may be problems because the UE does not expect to measure DL PRS resources if no MG is currently provided.

Additionally, since the CG-based PUSCH has benefits in terms of latency, regardless of whether the presence of the MG, the CG-based PUSCH may be used even when there is no MG.

When the UE is allowed to perform PRS measurement regardless of the MG, preconfigured PUSCH resources to be used for positioning measurement reporting may be all indicated resources. However, this may cause decoding overhead to the BS.

For example, FIG. 18 shows an example of positioning measurement reporting based on a CG-based PUSCH when no MG is configured (with no MG). If the UE transmits low layer signaling such as a MAC-CE and/or UCI to the BS before and/or after PRS measurement and also transmits information on preconfigured PUSCH resources to be used for measurement reporting, the BS may calculate PUSCH resources used by the UE to transmit the measurement report and perform decoding based on the corresponding information, thereby solving the problem.

If the CG-based PUSCH is supported for positioning measurement reporting when no MG is configured (with no MG), the activation of preconfigured PUSCH resources through low layer signaling (e.g., MAC CE and/or UCI) needs to be considered.

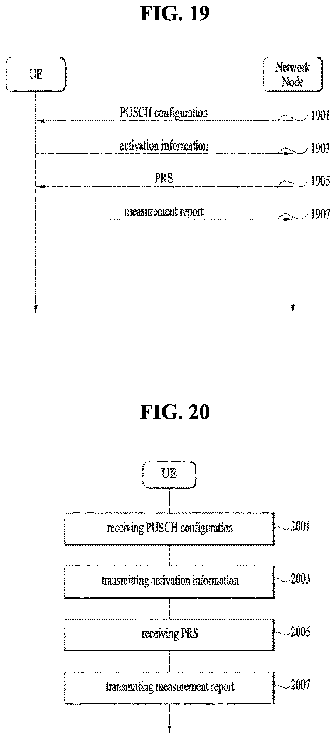

FIG. 19 is a diagram schematically illustrating a method of operating a UE and a network node according to various embodiments.

FIG. 20 is a flowchart illustrating a method of operating a UE according to various embodiments.

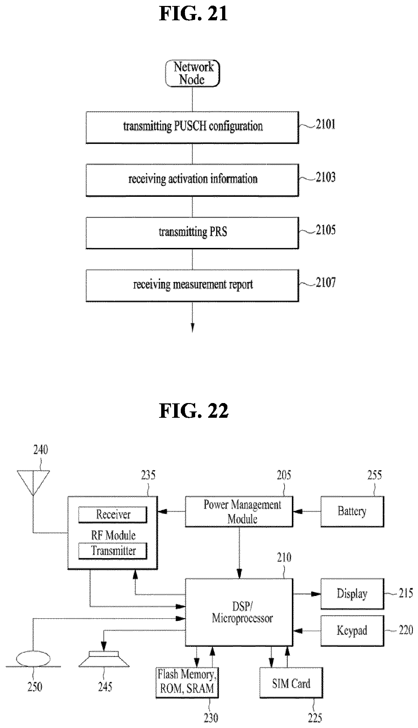

FIG. 21 is a flowchart illustrating a method of operating a network node according to various embodiments. For example, the network node may be a TP, a BS, a cell, a location server, an LMF, and/or any device that performs the same operations.

Referring to FIGS. 19 to 21, in operations 1901, 2001, and 2101 according to various embodiments, the network node may periodically transmit PUSCH configuration information related to a plurality of configured PUSCH resources, and the UE may receive the PUSCH configuration information.

In operations 1903, 2003, and 2103 according to various embodiments, the UE may transmit activation information for identifying one or more PUSCH resources on which information on one or more measurement reports are to be transmitted, and the network node may receive the activation information.

In operations 1905, 2005, and 2105 according to various embodiments, the network node may transmit one or more PRSs, and the UE may receive the one or more PRSs.

In operations 1907, 2007, and 2107 according to various embodiments, the UE may transmit the information on the one or more measurement reports obtained based on the one or more PRS, and the network node may receive the information on the one or more measurement reports.

According to various embodiments, the information on the one or more measurement reports may be transmitted on the one or more PUSCH resources among the plurality of PUSCH resources.

Specific operations of the UE and/or the network node according to the above-described various embodiments may be described and performed based on Section 1 to Section 3 described before.

Since examples of the above-described proposal method may also be included in one of implementation methods of various embodiments, it is obvious that the examples are regarded as a sort of proposed methods. Although the above-proposed methods may be independently implemented, the proposed methods may be implemented in a combined (aggregated) form of a part of the proposed methods. A rule may be defined such that the BS informs the UE of information as to whether the proposed methods are applied (or information about rules of the proposed methods) through a predefined signal (e.g., a physical layer signal or a higher-layer signal).

## 4. Exemplary Configurations of Devices Implementing Various embodiments

### 4.1. Exemplary configurations of devices to which various embodiments are applied

FIG. 22 is a diagram illustrating a device that implements various embodiments.

The device illustrated in FIG. 22 may be a UE and/or a BS (e.g., eNB or gNB or TP) and/or a location server (or LMF) which is adapted to perform the above-described mechanism, or any device performing the same operation.

Referring to FIG. 22, the device may include a digital signal processor (DSP)/microprocessor 210 and a radio frequency (RF) module (transceiver) 235. The DSP/microprocessor 210 is electrically coupled to the transceiver 235 and controls the transceiver 235. The device may further include a power management module 205, a battery 255, a display 215, a keypad 220, a SIM card 225, a memory device 230, an antenna 240, a speaker 245, and an input device 250, depending on a designer's selection.

Particularly, FIG. 22 may illustrate a UE including a receiver 235 configured to receive a request message from a network and a transmitter 235 configured to transmit timing transmission/reception timing information to the network. These receiver and transmitter may form the transceiver 235. The UE may further include a processor 210 coupled to the transceiver 235.

Further, FIG. 22 may illustrate a network device including a transmitter 235 configured to transmit a request message to a UE and a receiver 235 configured to receive timing transmission/reception timing information from the UE. These transmitter and receiver may form the transceiver 235. The network may further include the processor 210 coupled to the transceiver 235. The processor 210 may calculate latency based on the transmission/reception timing information.

A processor of a UE (or a communication device included in the UE) and/or a BS (or a communication device included in the BS) and/or a location server (or a communication device included in the location server) may operate by controlling a memory, as follows.

According to various embodiments, the UE or the BS or the location server may include at least one transceiver, at least one memory, and at least one processor coupled to the at least one transceiver and the at least one memory. The at least one memory may store instructions which cause the at least one processor to perform the following operations.

The communication device included in the UE or the BS or the location server may be configured to include the at least one processor and the at least one memory. The communication device may be configured to include the at least one transceiver or to be coupled to the at least one transceiver without including the at least one transceiver.

The TP and/or the BS and/or the cell and/or the location server and/or the LMF and/or any device performing the same operation may be referred to as a network node.

According to various embodiments, the at least one processor included in the UE (or at least one processor of the communication device included in the UE) may be configured to receive PUSCH configuration information related to a plurality of periodically configured PUSCH resources.

The at least one processor may be configured to receive one or more PRSs. The one or more PRSs may be received on at least one of one or more PRS resources or one or more PRS resource sets including the one or more PRS resources. The at least one processor may be configured to transmit information on one or more measurement reports obtained from the one or more PRSs.

According to various embodiments, the information on the one or more measurement reports may be transmitted on one or more PUSCH resources among the plurality of PUSCH resources.

According to various embodiments, before transmitting the information on the one or more measurement reports, the UE may transmit activation information for identifying the one or more PUSCH resources for transmitting the information on the one or more measurement reports.

According to various embodiments, the at least one processor included in the network node (or at least one processor of the communication device included in the network node) may be configured to: transmit PUSCH configuration information related to a plurality of periodically configured PUSCH resources; transmit one or more PRSs, wherein the one or more PRSs may be transmitted on at least one of one or more PRS resources or one or more PRS resource sets including the one or more PRS resources; and receive information on one or more measurement reports in response to the one or more PRSs.

According to various embodiments, the information on the one or more measurement reports may be received on one or more PUSCH resources among the plurality of PUSCH resources.

According to various embodiments, before receiving the information on the one or more measurement reports, activation information for identifying the one or more PUSCH resources for receiving the information on the one or more measurement reports may be received.

Specific operations of the UE and/or the network node according to the above-described various embodiments may be described and performed based on Section 1 to Section 3 described before.

Unless contradicting each other, various embodiments may be implemented in combination. For example, (the processor included in) the UE and/or the network node according to various embodiments may perform operations in combination of the embodiments of the afore-described in Section 1 to Section 3, unless contradicting each other.

## 4.2. Example of communication system to which various embodiments are applied

In the present specification, various embodiments have been mainly described in relation to data transmission and reception between a BS and a UE in a wireless communication system. However, various embodiments are not limited thereto. For example, various embodiments may also relate to the following technical configurations.

The various descriptions, functions, procedures, proposals, methods, and/or operational flowcharts of various embodiments described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

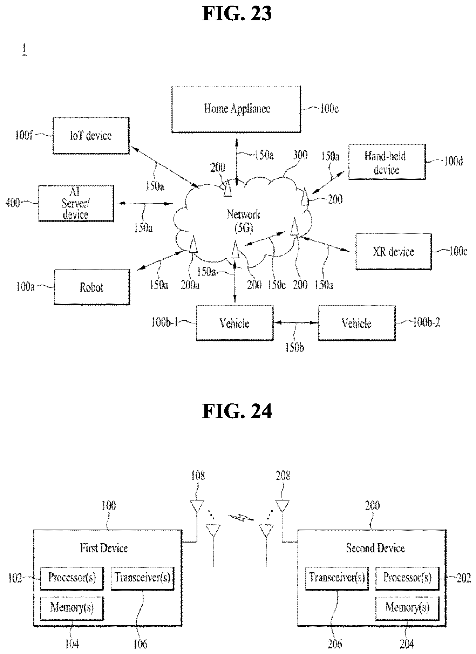

FIG. 23 illustrates an exemplary communication system to which various embodiments are applied.

Referring to FIG. 23, a communication system 1 applied to various embodiments includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of various embodiments.

Example of wireless devices to which various embodiments are applied

FIG. 24 illustrates exemplary wireless devices to which various embodiments are applicable.

Referring to FIG. 24, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 23.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In various embodiments, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In various embodiments, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

According to various embodiments, one or more memories (e.g., 104 or 204) may store instructions or programs which, when executed, cause one or more processors operably coupled to the one or more memories to perform operations according to various embodiments or implementations of the present disclosure.

According to various embodiments, a computer-readable storage medium may store one or more instructions or computer programs which, when executed by one or more processors, cause the one or more processors to perform operations according to various embodiments or implementations of the present disclosure.

According to various embodiments, a processing device or apparatus may include one or more processors and one or more computer memories connected to the one or more processors. The one or more computer memories may store instructions or programs which, when executed, cause the one or more processors operably coupled to the one or more memories to perform operations according to various embodiments or implementations of the present disclosure.

Example of using wireless devices to which various embodiments are applied

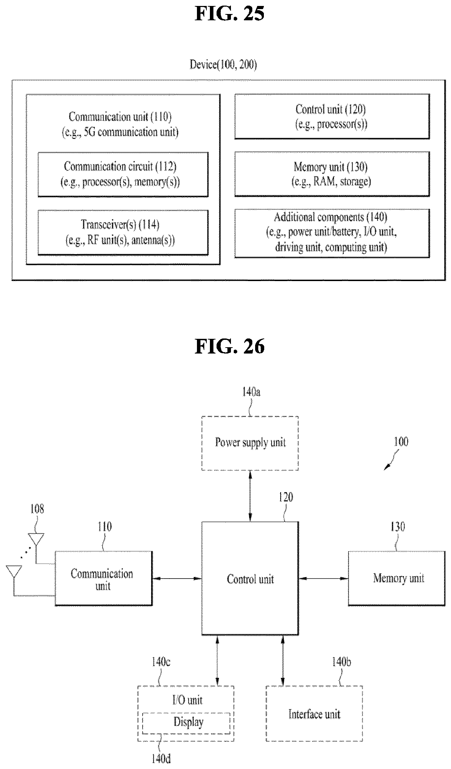

FIG. 25 illustrates other exemplary wireless devices to which various embodiments are applied. The wireless devices may be implemented in various forms according to a use case/service (see FIG. 23).

Referring to FIG. 25, wireless devices 100 and 200 may correspond to the wireless devices 100 and 200 of FIG. 24 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 24. For example, the transceiver(s) 114 may include the one or more transceivers 106 and 206 and/or the one or more antennas 108 and 208 of FIG. 24. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 23), the vehicles (100b-1 and 100b-2 of FIG. 23), the XR device (100c of FIG. 23), the hand-held device (100d of FIG. 23), the home appliance (100e of FIG. 23), the IoT device (100f of FIG. 23), a digital broadcast terminal, a hologram device, a public safety device, an MTC device, a medicine device, a Fintech device (or a finance device), a security device, a climate/environment device, the AI server/device (400 of FIG. 23), the BSs (200 of FIG. 23), a network node, etc. The wireless device may be used in a mobile or fixed place according to a use-example/service.

In FIG. 25, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 25 will be described in detail with reference to the drawings.

Example of portable device to which various embodiments are applied

FIG. 26 illustrates an exemplary portable device to which various embodiments are applied. The portable device may be any of a smartphone, a smartpad, a wearable device (e.g., a smartwatch or smart glasses), and a portable computer (e.g., a laptop). A portable device may also be referred to as mobile station (MS), user terminal (UT), mobile subscriber station (MSS), subscriber station (SS), advanced mobile station (AMS), or wireless terminal (WT).

Referring to FIG. 26, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 25, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

Example of vehicle or autonomous driving vehicle to which various embodiments

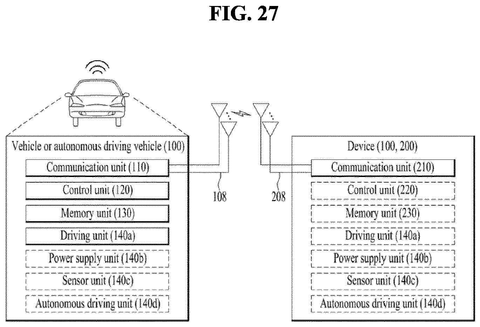

FIG. 27 illustrates an exemplary vehicle or autonomous driving vehicle to which various embodiments. The vehicle or autonomous driving vehicle may be implemented as a mobile robot, a car, a train, a manned/unmanned aerial vehicle (AV), a ship, or the like.

Referring to FIG. 27, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 25, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

In summary, various embodiments may be implemented through a certain device and/or UE.

For example, the certain device may be any of a BS, a network node, a transmitting UE, a receiving UE, a wireless device, a wireless communication device, a vehicle, a vehicle equipped with an autonomous driving function, an unmanned aerial vehicle (UAV), an artificial intelligence (AI) module, a robot, an augmented reality (AR) device, a virtual reality (VR) device, and other devices.

For example, a UE may be any of a personal digital assistant (PDA), a cellular phone, a personal communication service (PCS) phone, a global system for mobile (GSM) phone, a wideband CDMA (WCDMA) phone, a mobile broadband system (MBS) phone, a smartphone, and a multi-mode and multi-band (MM-MB) terminal.

A smartphone refers to a terminal taking the advantages of both a mobile communication terminal and a PDA, which is achieved by integrating a data communication function being the function of a PDA, such as scheduling, fax transmission and reception, and Internet connection in a mobile communication terminal. Further, an MM-MB terminal refers to a terminal which has a built-in multi-modem chip and thus is operable in all of a portable Internet system and other mobile communication system (e.g., CDMA 2000, WCDMA, and so on).

Alternatively, the UE may be any of a laptop PC, a hand-held PC, a tablet PC, an ultrabook, a slate PC, a digital broadcasting terminal, a portable multimedia player (PMP), a navigator, and a wearable device such as a smartwatch, smart glasses, and a head mounted display (HMD). For example, a UAV may be an unmanned aerial vehicle that flies under the control of a wireless control signal. For example, an HMD may be a display device worn around the head. For example, the HMD may be used to implement AR or VR.

The wireless communication technology in which various embodiments are implemented may include LTE, NR, and 6G, as well as narrowband Internet of things (NB-IoT) for low power communication. For example, the NB-IoT technology may be an example of low power wide area network (LPWAN) technology and implemented as the standards of LTE category (CAT) NB1 and/or LTE Cat NB2. However, these specific appellations should not be construed as limiting NB-IoT. Additionally or alternatively, the wireless communication technology implemented in a wireless device according to various embodiments may enable communication based on LTE-M. For example, LTE-M may be an example of the LPWAN technology, called various names such as enhanced machine type communication (eMTC). For example, the LTE-M technology may be implemented as, but not limited to, at least one of 1) LTE CAT 0, 2) LTE Cat M1, 3) LTE Cat M2, 4) LTE non-bandwidth limited (non-BL), 5) LTE-MTC, 6) LTE machine type communication, and/or 7) LTE M. Additionally or alternatively, the wireless communication technology implemented in a wireless device according to various embodiments may include, but not limited to, at least one of ZigBee, Bluetooth, or LPWAN in consideration of low power communication. For example, ZigBee may create personal area networks (PANs) related to small/low-power digital communication in conformance to various standards such as IEEE 802.15.4, and may be referred to as various names.

Various embodiments may be implemented in various means. For example, various embodiments may be implemented in hardware, firmware, software, or a combination thereof.

In a hardware configuration, the methods according to exemplary embodiments may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the methods according to various embodiments may be implemented in the form of a module, a procedure, a function, etc. performing the above-described functions or operations. A software code may be stored in the memory 50 or 150 and executed by the processor 40 or 140. The memory is located at the interior or exterior of the processor and may transmit and receive data to and from the processor via various known means.

Those skilled in the art will appreciate that various embodiments may be carried out in other specific ways than those set forth herein without departing from the spirit and essential characteristics of various embodiments. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. It is obvious to those skilled in the art that claims that are not explicitly cited in each other in the appended claims may be presented in combination as an embodiment or included as a new claim by a subsequent amendment after the application is filed.

## INDUSTRIAL APPLICABILITY

Various embodiments are applicable to various wireless access systems including a 3GPP system, and/or a 3GPP2 system. Besides these wireless access systems, various embodiments are applicable to all technical fields in which the wireless access systems find their applications. Moreover, the proposed method can also be applied to mmWave communication using an ultra-high frequency band.

## Claims

1.   A method performed by a user equipment (UE) in a wireless communication system, the method comprising:

receiving physical uplink shared channel (PUSCH) configuration information related to a plurality of periodically configured PUSCH resources;
receiving one or more positioning reference signals (PRSs), wherein the one or more PRSs are received on at least one of one or more PRS resources or one or more PRS resource sets including the one or more PRS resources; and
transmitting information on one or more measurement reports obtained from the one or more PRSs,
wherein the information on the one or more measurement reports is transmitted on one or more PUSCH resources among the plurality of PUSCH resources, and
wherein before transmitting the information on the one or more measurement reports, the UE transmits activation information for identifying the one or more PUSCH resources for transmitting the information on the one or more measurement reports.

2.   The method of claim 1, wherein the activation information includes information indicating that among multiple PUSCH resources after a time at which the activation information is transmitted among the plurality of PUSCH resources, an N-th PUSCH resource or resources from the N-th PUSCH resource to an M-th PUSCH resource are the one or more PUSCH resources, where N is a natural number, and M is a natural number.

3.  The method of claim 1, wherein based on the UE being in a radio resource control (RRC) connected state, the activation information is transmitted in at least one of a medium access control (MAC) control element (CE) or uplink control information (UCI), and
    wherein based on the UE being in an RRC inactive state or an RRC idle state, the activation information is transmitted on a physical random access channel (PRACH).

4.  The method of claim 1, wherein based on a measurement gap (MG) being not configured, the activation information is transmitted by the UE, and
    wherein based on the MG being configured:

    the one or more PRSs are received within the MG;
    the activation information is not transmitted; and
    the one or more PUSCH resources for transmitting the information on the one or more measurement reports are one or more PUSCH resources included after the MG and closest to an end point of the MG among the plurality of PUSCH resources.

5.  The method of claim 1, wherein based on a measurement gap (MG) being configured;

    the one or more PRSs are received within the MG; and
    the one or more PUSCH resources for transmitting the information on the one or more measurement reports are one or more PUSCH resources included after the MG and indicated as activated based on a bitmap included in the activation information among the plurality of PUSCH resources.

6.  The method of claim 1, wherein based on a measurement gap (MG) being configured;

    the one or more PRSs are received within the MG; and
    the one or more PUSCH resources for transmitting the information on the one or more measurement reports are one or more PUSCH resources included after the MG and included within a predetermined time duration among the plurality of PUSCH resources.

7.  A user equipment (UE) configured to operate in a wireless communication system, the UE comprising:

    a transceiver; and
    at least one processor connected to the transceiver,
    wherein the at least one processor is configured to:

    receive physical uplink shared channel (PUSCH) configuration information related to a plurality of periodically configured PUSCH resources;
    receive one or more positioning reference signals (PRSs), wherein the one or more PRSs are received on at least one of one or more PRS resources or one or more PRS resource sets including the one or more PRS resources; and
    transmit information on one or more measurement reports obtained from the one or more PRSs,
    wherein the information on the one or more measurement reports is transmitted on one or more PUSCH resources among the plurality of PUSCH resources, and
    wherein before transmitting the information on the one or more measurement reports, the UE transmits activation information for identifying the one or more PUSCH resources for transmitting the information on the one or more measurement reports.

8.  The UE of claim 7, wherein the activation information includes information indicating that among multiple PUSCH resources after a time at which the activation information is transmitted among the plurality of PUSCH resources, an N-th PUSCH resource or resources from the N-th PUSCH resource to an M-th PUSCH resource are the one or more PUSCH resources, where N is a natural number, and M is a natural number.

9.  The UE of claim 7, wherein based on the UE being in a radio resource control (RRC) connected state, the activation information is transmitted in at least one of a medium access control (MAC) control element (CE) or uplink control information (UCI), and

wherein based on the UE being in an RRC inactive state or an RRC idle state, the activation information is transmitted on a physical random access channel (PRACH).

10. The UE of claim 1, wherein based on a measurement gap (MG) being not configured, the activation information is transmitted by the UE, and
wherein based on the MG being configured:

the one or more PRSs are received within the MG;
the activation information is not transmitted; and
the one or more PUSCH resources for transmitting the information on the one or more measurement reports are one or more PUSCH resources included after the MG and closest to an end point of the MG among the plurality of PUSCH resources.

11. The UE of claim 7, wherein the at least one processor is configured to communicate with at least one of a mobile terminal, a network, or an autonomous vehicle other than a vehicle including the UE.

12. A method performed by a base station (BS) in a wireless communication system, the method comprising:

transmitting physical uplink shared channel (PUSCH) configuration information related to a plurality of periodically configured PUSCH resources;
transmitting one or more positioning reference signals (PRSs), wherein the one or more PRSs are transmitted on at least one of one or more PRS resources or one or more PRS resource sets including the one or more PRS resources; and
receiving information on one or more measurement reports in response to the one or more PRSs,
wherein the information on the one or more measurement reports is received on one or more PUSCH resources among the plurality of PUSCH resources, and
wherein before receiving the information on the one or more measurement reports, activation information for identifying the one or more PUSCH resources for receiving the information on the one or more measurement reports is received.

13. A base station (BS) configured to operate in a wireless communication system, the BS comprising:

a transceiver; and
at least one processor connected to the transceiver,
wherein the at least one processor is configured to:

transmit physical uplink shared channel (PUSCH) configuration information related to a plurality of periodically configured PUSCH resources;
transmit one or more positioning reference signals (PRSs), wherein the one or more PRSs are transmitted on at least one of one or more PRS resources or one or more PRS resource sets including the one or more PRS resources; and
receive information on one or more measurement reports in response to the one or more PRSs,
wherein the information on the one or more measurement reports is received on one or more PUSCH resources among the plurality of PUSCH resources, and
wherein before receiving the information on the one or more measurement reports, activation information for identifying the one or more PUSCH resources for receiving the information on the one or more measurement reports is received.

14. An apparatus configured to operate in a wireless communication system, the apparatus comprising:

at least one processor; and
at least one memory operably connected to the at least one processor and configured to store one or more instructions that, based on execution, cause the at least one processor to perform operations comprising:

receiving physical uplink shared channel (PUSCH) configuration information related to a plurality of periodically configured PUSCH resources;
receiving one or more positioning reference signals (PRSs), wherein the one or more PRSs are received on at least one of one or more PRS resources or one or more PRS resource sets including the one or more PRS resources; and

transmitting information on one or more measurement reports obtained from the one or more PRSs, wherein the information on the one or more measurement reports is transmitted on one or more PUSCH resources among the plurality of PUSCH resources, and

wherein before transmitting the information on the one or more measurement reports, the apparatus transmits activation information for identifying the one or more PUSCH resources for transmitting the information on the one or more measurement reports.

15. A non-transitory processor-readable medium configured to store one or more instructions that cause at least one processor to perform operations comprising:

receiving physical uplink shared channel (PUSCH) configuration information related to a plurality of periodically configured PUSCH resources;

receiving one or more positioning reference signals (PRSs), wherein the one or more PRSs are received on at least one of one or more PRS resources or one or more PRS resource sets including the one or more PRS resources; and

transmitting information on one or more measurement reports obtained from the one or more PRSs,

wherein the information on the one or more measurement reports is transmitted on one or more PUSCH resources among the plurality of PUSCH resources, and

wherein before transmitting the information on the one or more measurement reports, activation information for identifying the one or more PUSCH resources for transmitting the information on the one or more measurement reports is transmitted.

FIG. 1

# FIG. 2

## FIG. 3

# FIG. 4

**FIG. 5**

UE — BS

Resource configuration

Uplink Transmission

Packet arrival

Fig. Uplink TX procedure without grant

(b)

UE — BS

Scheduling Request

Uplink grant

Uplink TX with BSR

Uplink grant

Uplink grant

Uplink Transmission

Packet arrival

Fig. Uplink TX procedure with grant

(a)

# FIG. 6

Reference Source

GNSS signals (B)

LPP

Measurements(A,B or A+B) or Location

Assistance Data

Target Device

UE/SET

Location server

E-SMLC/SLP/LMF

radio signals (A)

- E-CID Location Information Transfer
- OTDOA Information Transfer
- Reporting of General Error Situations

NRPPa

Reference Source

ACCESS NODE / BS / TS / NG-RAN

**FIG. 7**

# FIG. 8

# FIG. 9

EP 4 383 863 A1

**FIG. 10**

| NRPPa | HTTP/2 | TLS | IP | L2 | L1 |
|  |  | TCP |  |  |  |

LMF

NLs

| | HTTP/2 | TLS | IP | L2 | L1 |
| NGAP | | TCP | | | |
| | SCTP | IP | L2 | L1 |

AMF

NG-C

| NRPPa | NGAP | SCTP | IP | L2 | L1 |

NG RAN

**FIG. 11**

54

# FIG. 12

(a)

(b)

# FIG. 13

**FIG. 14**

(a) UE:
- configuration information — 1601(a)
- receiving signal related to configuration information — 1603(a)
- transmitting information related to postitioning — 1605(a)

(b) TRP:
- receiving/transmitting configuration information — 1601(b)
- transmitting signal related to configuration information — 1603(b)
- receiving/transmitting information related to postitioning — 1605(b)

(c) location server /LMF:
- transmitting configuration information — 1601(c)
- receiving information related to postitioning — 1605(c)

EP 4 383 863 A1

57

# FIG. 15

**FIG. 16**

**FIG. 17**

FIG. 18

# FIG. 19

UE

Network Node

PUSCH configuration — 1901

activation information — 1903

PRS — 1905

measurement report — 1907

# FIG. 20

UE

receiving PUSCH configuration — 2001

transmitting activation information — 2003

receiving PRS — 2005

transmitting measurement report — 2007

# FIG. 21

```
           Network
            Node

  ┌──────────────────────────────┐
  │ transmitting PUSCH configuration │─── 2101
  └──────────────────────────────┘

  ┌──────────────────────────────┐
  │  receiving activation information │─── 2103
  └──────────────────────────────┘

  ┌──────────────────────────────┐
  │       transmitting PRS        │─── 2105
  └──────────────────────────────┘

  ┌──────────────────────────────┐
  │   receiving measurement report │─── 2107
  └──────────────────────────────┘
```

# FIG. 22

```
  240
   \/                235              205            255
                ┌──────────┐    ┌──────────────┐  ┌────────┐
                │ Receiver │    │   Power       │  │Battery │
                ├──────────┤◄───│  Management   │◄─│        │
                │RF Module │    │   Module      │  └────────┘
                ├──────────┤    └──────────────┘
                │Transmitter│
                └──────────┘          210
                                 ┌──────────────┐    ┌─────────┐
                                 │    DSP/       │───►│ Display │─215
                                 │ Microprocessor│    └─────────┘
                                 │               │    ┌─────────┐
                                 └──────────────┘◄───│ Keypad  │─220
                                                      └─────────┘
      ○         ▽        ┌───────────┐   ┌──────────┐
     250       245       │Flash Memory,│   │ SIM Card │
                         │ROM, SRAM   │   └──────────┘
                         └───────────┘         225
                              230
```

# FIG. 23

# FIG. 24

# FIG. 25

Device(100, 200)

| | |
|---|---|
| Communication unit (110) (e.g., 5G communication unit) | Control unit (120) (e.g., processor(s)) |
| Communication circuit (112) (e.g., processor(s), memory(s)) | Memory unit (130) (e.g., RAM, storage) |
| Transceiver(s) (114) (e.g., RF unit(s), antenna(s)) | Additional components (140) (e.g., power unit/battery, I/O unit, driving unit, computing unit) |

# FIG. 26

140a

Power supply unit

100

120

108

110

Communication unit

Control unit

130

Memory unit

140c

I/O unit

Display

140d

140b

Interface unit

# FIG. 27

| Vehicle or autonomous driving vehicle (100) | Device (100, 200) |
|---|---|
| Communication unit (110) | Communication unit (210) |
| Control unit (120) | Control unit (220) |
| Memory unit (130) | Memory unit (230) |
| Driving unit (140a) | Driving unit (140a) |
| Power supply unit (140b) | Power supply unit (140b) |
| Sensor unit (140c) | Sensor unit (140c) |
| Autonomous driving unit (140d) | Autonomous driving unit (140d) |

108    208

<div align="center">

**INTERNATIONAL SEARCH REPORT**

</div>

| International application No. |
|---|
| **PCT/KR2022/011760** |

### A. CLASSIFICATION OF SUBJECT MATTER

**H04W 64/00**(2009.01)i; **H04W 24/10**(2009.01)i; **H04W 72/14**(2009.01)i; **H04L 5/00**(2006.01)i; **H04L 1/00**(2006.01)i

According to International Patent Classification (IPC) or to both national classification and IPC

### B. FIELDS SEARCHED

Minimum documentation searched (classification system followed by classification symbols)

H04W 64/00(2009.01); G01S 5/02(2010.01); H04L 5/00(2006.01); H04W 8/24(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH 설정(PUSCH configuration), PUSCH 자원(PUSCH resource), PRS, PRS 자원(PRS resource), 측정 보고(measurement report), 활성화 정보(activation information)

### C. DOCUMENTS CONSIDERED TO BE RELEVANT

| Category* | Citation of document, with indication, where appropriate, of the relevant passages | Relevant to claim No. |
|---|---|---|
| A | WO 2020-145700 A1 (LG ELECTRONICS INC.) 16 July 2020 (2020-07-16)<br>See paragraphs [0256]-[0258]; and figure 19. | 1-15 |
| A | MODERATOR (HUAWEI). FL summary #1 of 8.5.4 latency improvements for DL and DL+UL methods. R1-2105989, 3GPP TSG RAN WG1 #105-e, e-Meeting. 24 May 2021.<br>See page 5. | 1-15 |
| A | KR 10-2020-0100004 A (LG ELECTRONICS INC.) 25 August 2020 (2020-08-25)<br>See paragraphs [0284]-[0360]; and figures 20-22. | 1-15 |
| A | WO 2021-154420 A1 (QUALCOMM INCORPORATED) 05 August 2021 (2021-08-05)<br>See paragraphs [0121]-[0135]; and figures 11-12. | 1-15 |
| A | US 2021-0051622 A1 (QUALCOMM INCORPORATED) 18 February 2021 (2021-02-18)<br>See paragraphs [0178]-[0181]; and figure 13. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 November 2022** | **18 November 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/011760**

| Patent document cited in search report | | | Publication date (day/month/year) | Patent family member(s) | | | Publication date (day/month/year) |
|---|---|---|---|---|---|---|---|
| WO | 2020-145700 | A1 | 16 July 2020 | CN | 113273267 | A | 17 August 2021 |
| | | | | EP | 3905801 | A1 | 03 November 2021 |
| | | | | KR | 10-2021-0106004 | A | 27 August 2021 |
| | | | | US | 2022-0095265 | A1 | 24 March 2022 |
| KR | 10-2020-0100004 | A | 25 August 2020 | CN | 113455065 | A | 28 September 2021 |
| | | | | EP | 3911052 | A1 | 17 November 2021 |
| | | | | WO | 2020-167055 | A1 | 20 August 2020 |
| WO | 2021-154420 | A1 | 05 August 2021 | KR | 10-2022-0133885 | A | 05 October 2022 |
| | | | | TW | 202131725 | A | 16 August 2021 |
| US | 2021-0051622 | A1 | 18 February 2021 | CN | 114651490 | A | 21 June 2022 |
| | | | | EP | 4014611 | A1 | 22 June 2022 |
| | | | | KR | 10-2022-0044954 | A | 12 April 2022 |
| | | | | TW | 202123744 | A | 16 June 2021 |
| | | | | WO | 2021-030628 | A1 | 18 February 2021 |

Form PCT/ISA/210 (patent family annex) (July 2022)